# EUROPEAN PATENT APPLICATION

(11) **EP 3 614 329 A1**
(43) Date of publication of application: **26.02.2020**
(21) Application number: 19192940.5
(22) Date of filing: 21.08.2019
(51) Int. Cl.: G06Q 40/02

(54) **SYSTEMS AND METHODS FOR BUILDING DYNAMIC INTERFACES, SCALABLE ARCHITECTURE FOR MANAGING TRANSACTIONS, IMPROVED VISUALIZATION OF TRANSACTION DATA AND CATEGORIZATION OF NON-CONTINGUOUS TRANSACTIONS**

(30) Priority: 21.08.2018 US 201816107524; 21.08.2018 US 201816107480; 21.08.2018 US 201816107571; 22.08.2018 US 201816108865
(71) Applicant: Capital One Services, LLC, McLean, Virginia 22102 (US)
(72) Inventor: HART, Colin, Mclean, VA Virginia 22102 (US); JI, Jason, Mclean, VA Virginia 22102 (US); COLEVAS, Alexandra A., Mclean, VA Virginia 22102 (US); QUADROS, Steven, Mclean, VA Virginia 22102 (US); MALIK, Adnan, Mclean, VA Virginia 22102 (US); ALEXANDER, Jared M., Mclean, VA Virginia 22102 (US); GOLDER, Scott, Mclean, VA Virginia 22102 (US); ABBOTT, Allison, Mclean, VA Virginia 22102 (US); HORTON, Matthew, Mclean, VA Virginia 22102 (US); SAGAN, Emma, Mclean, VA Virginia 22102 (US); EMMOTT, Kevan, Mclean, VA Virginia 22102 (US); BERGLUND, Christine Ann, Mclean, VA Virginia 22102 (US)
(74) Representative: Barker Brettell LLP

(57) **Abstract**

Provided, in an aspect, is a system for managing transactions from a computer network. The system has a scalable architecture, and includes a database, one or more processors, a plurality of experience matchers, and a transaction hub. Each experience matcher is associated with a different experience set type, and can receive a transaction list and return an identified experience set. The transaction hub can communicate with multiple experience matchers, and can receive experience sets from the matchers after sending them a list of transactions.

## Description

### BACKGROUND

Systems for managing personal finances, for example expenses, may rely on a series of individual or discrete transactions. Transactions may be automatically imported from a financial services account, such as a credit card account, entered manually by a user, or otherwise obtained by the system. Once the transactions are obtained, the system may display them individually on a display screen.

A transaction may have a merchant category code (MCC) associated with it. The MCC is an ISO standard that can be assigned to a merchant by a credit card company. Some systems for managing personal finances may allow displaying the MCC with each transaction. For example, a taxi payment may be categorized as "transportation," and a movie ticket purchase may be categorized as "entertainment" according to a pre-assigned merchant category code. When such categorizations are available, either as automatically supplied by a financial institution or as entered manually by a user (the user-entered codes may be different from standard MCCs, unless the system only allows a user to enter a standard MCC), some systems may further allow displaying subgroups of transactions based on their category codes. This may allow a user to see what merchant categories involve the most expenses. Banks and other financial institutions may group transactions using merchant category codes for the purpose of defining rules and restrictions around those transactions. Consequently, there may be a number of categories that are redundant or unhelpful to users, since MCCs are primarily focused on merchants and are limited to describing transactions in isolation from their context. Lack of their user focus and lack of their user customization further limit the usefulness of MCCs.

In addition, transactions are often ordered and displayed by financial management software based on their dates of settlement. As such, the displayed order of transactions that a user sees might be different from the order in which the user has actually made the transactions. Further adding to the challenges of interpreting a list of transactions, unrelated transactions might be ordered next to each other while the related ones might be interspersed with many unrelated ones in between them, either due to imprecise and inaccurate chronology or due to the natural way in which users make purchases.

Some systems may allow a user to view total amounts spent during a specified period, or to view the total amounts spent during a period from transactions with certain merchant category codes. However, users may find it difficult to understand from these systems how their money is spent beyond the individual transactions and merchant category codes, in addition finding it challenging to draw conclusions from the standard (often incorrect) chronology of the transactions.

Applications and/or websites, such as those configured for use with mobile devices, include user interfaces that may present a variety of information that is dynamic in nature. For example, financial institutions and/or providers may distribute information about a user's financial accounts through mobile apps and/or mobile websites, and in other examples, other dynamic data may be distributed through mobile-friendly user interfaces. Generally, these mobile apps and/or mobile websites are constrained by the screen size and configuration of mobile devices, which may be small and vertically-oriented. Accordingly, customizing the user interfaces may be difficult, especially for the end user.

### SUMMARY

In an aspect of the present disclosure, a system is disclosed for managing transactions from a computer network, the system having a scalable architecture and including a database; one or more processors; a plurality of experience matchers; and a transaction hub. The experience matchers may be associated with a different experience set type, each of the experience matchers being configured for execution by the one or more processors to receive a list of transactions; identify, within the list of transactions, one or more experience sets having an associated experience set type, wherein each experience set encompasses one or more transactions related (e.g., temporospatially, logically) to each other from the list of transactions; and return the one or more identified experience sets. The transaction hub may be configured for execution by the one or more processors to receive a transaction stream from a financial services computer network; send a list of transactions generated from the transaction stream to a plurality of experience matchers; receive one or more identified experience sets from the plurality of experience matchers; and store the identified experience sets in the database. The computer network may be a financial services computer network.

In some embodiments of the system, each of the experience matchers is configured for execution by the one or more processors to further determine, and return to the transaction hub, a match score for each of the one or more identified experience sets. The transaction hub may be configured for execution by the one or more processors to further prioritize allocation of a transaction into an identified experience set based on the match scores. The match score is determined based on a factor such as a transaction time range, transaction merchant codes, transaction physical proximity, transaction temporal proximity, or a combination of such factors. In some embodiments of the system, each of the experience matchers is configured for execution by the one or more processors to perform the search and return operations in real time with a delay of less than ten minutes after receiving the list of transactions. The transaction hub may be configured for execution by the one or more processors to receive the transaction stream in real time with a delay of less than ten minutes after a transmittal of a new transaction to be appended to the list of transactions. The system may be configured to be modified by addition of new independent experience matchers. The new experience matchers may be created based on user research, or via machine learning.

In an aspect of the present disclosure, a computer implemented method for forming an experience set from a transaction list from a computer network using a scalable system architecture includes obtaining by a transaction hub a past transaction list from a computer network; receiving by the transaction hub a transaction from the computer network; updating by the transaction hub the past transaction list into a current transaction list by adding in the transaction; sending by the transaction hub the current transaction list to each of a plurality of independent experience matchers; analyzing by each of the experience matchers the current transaction list to identify an experience set; receiving by the transaction hub an identified experience set from one of the experience matchers, wherein the experience set contains at least two transactions from the current transaction list; and storing the experience set by the transaction hub in a database. The computer network may be a financial services computer network.

In some embodiments of the method, the current transaction list contains transactions from a predetermined time range. The time range may be thirty days. In some embodiments, the time range may be selected (e.g., 60 days, 50 days, 40 days, 30 days, 20 days, 10 days, 5 days, 24 hours). The transaction may be received in real time with a delay of less than ten minutes. The matching experience set may also be received in real time with a delay of less than ten minutes. The method may further include receiving from each of the experience matchers a match score. The match score may be determined based on transaction time, transaction type, transaction distance, and transaction interval. The method may also include revising the plurality of experience matchers, or revising the experience set, which may be revised via machine learning.

In one aspect of the present disclosure, a system for generating a humanized experience set from a list of transactions from a computer network includes a transaction database; one or more processors; and memory operably linked to the one or more processors, wherein the memory has disposed in it a scalable system of software architecture. The architecture, in this aspect, includes a transaction hub and a plurality of independent experience matchers. The transaction hub may have instructions executable by the one or more processors to receive a transaction stream from a from a computer network in real time with a delay of less than ten minutes after a recent transaction; send a list of transactions generated from the transaction stream to a plurality of independent experience matchers; receive one or more identified experience sets and their match scores from the experience matchers, wherein each experience set encompasses one or more transactions from the list of transactions; prioritize allocation of a transaction into an identified experience set based on the match scores, thereby obtaining a prioritized identified experience set; and store the prioritized identified experience set in the transaction database. The plurality of independent experience matchers may have instructions executable by the one or more processors to receive a list of transactions from the transaction hub; analyze the list of transactions to identify one type of experience set; determine a match score for each identified experience set, wherein the match score is determined based on a factor such as a transaction time range, transaction merchant codes, transaction physical proximity, transaction temporal proximity, or a combination of such factors; and return one or more identified experience sets, each of a common experience set type, and their one or more match scores to the transaction hub. The computer network may be a financial services computer network.

In an aspect of the present disclosure, a method for improved visualization of transaction data from a computer network includes receiving, at a computing device, a plurality of experience sets; presenting, on a display of the computing device, a graphical user interface (GUI); and updating the GUI in response to receiving a revision to the plurality of experience sets. In this aspect, each experience set includes an experience set name, an experience set date (or date range), an experience set time span, and an experience set amount, whereas each experience set contains one or more transactions that relate to each other (e.g., temporospatially, logically), wherein each transaction includes a transaction place, a transaction time, and a transaction amount; In this aspect, the GUI includes a scrollable list including at least a portion of the experience set name for experience sets within a selected time period, the scrollable list including a chronological order based on the experience set date (or the initial date of a date range, or the last day of a date range, or another representative date of the date range, such as mean date, median date, weighted average date, etc.) for each of the experience sets; and a calendar for the time period showing, for each day, a graphical element indicative of a total of all experience set amounts in that day. When an experience set has transactions that occur within a date range, the term "experience set date" may be used to refer to a representative date (e.g., a date that is nearest to the middle of the date range, in some embodiments, unless otherwise specified). The computer network may be a financial services computer network.

In some embodiments, the method further includes displaying on the graphical user interface of the computing device, alongside the portion of the experience set name for each of the experience sets, one or more experience details such as an experience set location, an experience set time span, an experience set amount that corresponds to a total of all transaction amounts in the experience set, a list of three transaction names for transactions with greatest transaction amounts in the experience set, or a combination of such details. In some embodiments, the method further includes, in response to a user scrolling through the scrollable list, highlighting in the calendar a graphical element that corresponds to a topmost experience set visible on the display screen. In some embodiments, the method further includes, in response to a user tapping on a graphical element in the calendar, automatically scrolling the scrollable list to place a corresponding experience set to be visible on the display screen above other experience sets.

In some embodiments, the method further includes, in response to a user input, displaying a territorial map showing each transaction place encompassed by a chosen experience set. In some embodiments, the method further includes, in response to a user input, excluding each predefined non-discretionary transaction from each experience set, and accordingly revising the calendar. The method may also include, in response to a user input, modifying an experience set. Methods that further include receiving from a user feedback regarding an experience set are also encompassed in the aspect. In some embodiments, an experience set includes transactions made within a preset distance to a user's default location and within a preset time window around noon. In some embodiments, an experience set includes transactions made farther than a preset distance from a user's default location. In some embodiments, an experience set includes transactions made within a preset distance to a user's default location and within a preset time window around 9 p.m. In some embodiments, an experience set includes transactions made within a preset time window; as an example, around 11-2 p.m. for a "lunch." Various other preset time windows may also be used.

According to an aspect of the present disclosure, a method implemented on a computer for humanizing in a graphical user interface presentation of transaction data from a computer network includes receiving, at a computing device, a plurality of experience categories; presenting on a display of the computing device a graphical user interface (GUI); and updating the GUI in response to receiving a revision to the plurality of experience sets. In this aspect, each experience category has an experience category name and an experience category amount; each category contains one or more experience sets of a common experience set type that fall within a selected time period; each experience set has an experience set name, an experience set date (or date range), an experience set time span, and an experience set amount; each experience set further contains one or more transactions that relate (e.g., temporospatially, logically) to the experience set; and each transaction has a transaction place, a transaction time, and a transaction amount. In this aspect, the GUI includes a scrollable list having at least a portion of the experience category name for each of the experience categories within the time period; and a breakdown schematic for the time period showing, for each experience category, a distinct graphical element indicative of the experience category amount in the time period. The computer network may be a financial services computer network.

In some embodiments, the method further includes, in response to a user input, changing the time period, and accordingly updating both the scrollable list and the breakdown schematic. In some embodiments, the method further includes, in response to a user input, displaying the one or more experience sets encompassed by a category. The method may also include, in response to a user input, displaying a territorial map showing each transaction place encompassed by a chosen experience category.

In some embodiments, the method further includes, in response to a user input, excluding each predefined non-discretionary transaction from each experience category and breakdown schematic. The method may further include, in response to a user input, modifying an experience category. In some embodiments, the method further includes receiving feedback from a user regarding an experience category. The method may further include, in response to a user input, changing an experience set name, removing a transaction from an experience set, adding another transaction to an experience set, merging an experience set with another experience set, or a combination of such actions.

In one aspect of the present disclosure, a computing device has a display screen, the computing device being configured to display on the screen a plurality of experience sets, additionally being configured to display on the screen a calendar schematic showing a disk corresponding to each experience set, and additionally being configured to display on the screen a breakdown schematic showing a graphical element corresponding to each category that includes at least one experience set, in which each of the plurality of experience sets, the calendar schematic, and the breakdown schematic is selectable and editable by a user.

In an aspect of the present disclosure, a method for improved management of transaction data from a computer network includes receiving, from the computer network, details for a first purchase made by a user on a start date; detecting that the first purchase is a trigger purchase; obtaining secondary details for the first purchase from a data source external to the computer network, wherein the secondary details for the first purchase indicate that the first purchase is associated with an event on a target date later than the start date; receiving, from the computer network, details for a second purchase made by the user on the target date; receiving details for one or more other purchases made after the first purchase and before the second purchase; determining that the second purchase and the first purchase are part of a common experience set by comparing the details for the second purchase with at least one of the details for the first purchase and the secondary details for the first purchase, wherein the one or more other purchases are determined not to be part of the common experience set; and storing the common experience set to a database. The computer network may be a financial services computer network.

In some embodiments of the method, the first purchase is detected as a trigger purchase by comparing the first purchase details with predetermined attributes from a trigger transaction database. The method may further include receiving details for one or more additional purchases made after the second purchase, and categorizing the one or more additional purchases as part of the common experience set. The method may also include determining that each of the additional purchases is related to the first purchase by comparing each of the additional purchase details with the first purchase details, with the first purchase secondary details, or with both the first purchase details and the first purchase secondary details. The first purchase secondary details may further include an end date after which no purchases are categorized as part of the common experience set. In some embodiments, the first purchase details and the second purchase details are received concurrently with each other. The first purchase details and the second purchase details may also be received separately and in real time as each of the first purchase and the second purchase is made.

In some embodiments, the first purchase is detected as a trigger purchase when the first purchase details indicate that the first purchase corresponds to purchasing a flight ticket, purchasing a cruise ticket, purchasing a train ticket, purchasing a bus ticket, reserving a rental car, reserving an event space, booking a hotel space, booking a motel space, or booking a hostel space. The first purchase secondary details may be obtained via email scraping (e.g., after obtaining an authorization). The first purchase secondary details may also be obtained from a third-party supplier. The target date may be one day to one year after the start date (e.g., 2 days, 10 days, 1 month, 2 months, 6 months). In some embodiments, the target date may be more than a week and less than two months after the start date.

In an aspect of the present disclosure, a method for improving categorization of transactions by money-management software includes receiving a first transaction made on a first date from a computer network; detecting that the first transaction is a trigger transaction (e.g., the first of a set of transactions that form a common experience set) by matching first transaction attributes to predetermined trigger transaction attributes; obtaining forecast data for the first transaction from a forecast agent, wherein the forecast data include a second date; receiving, after a period encompassing a plurality of unrelated transactions, a second transaction made on the second date; determining that the second transaction and the first transaction are part of an experience set by comparing the forecast data to second transaction attributes; and storing the experience set to a database. The computer network may be a financial services computer network.

In some embodiments, the method further includes receiving input from a user indicating that the first transaction is a trigger transaction. The forecast data in the method may further include a place. The method may also include receiving input from a user to modify the forecast data. In some embodiments, the method includes displaying a confirmation after the second transaction. In some embodiments, a reminder is displayed before the second date. The method may also include acquiring a choice from a user regarding the second transaction, and determining that the second transaction is related to the first transaction based on the choice. In some embodiments of the method, summary of the experience set can be generated.

In one aspect of the present disclosure, a non-transitory computer-readable medium for forming an experience set from a plurality of transaction data with instructions stored on the medium that when executed by a processor perform steps that include receiving a first transaction; detecting that the first transaction is a trigger transaction, wherein the first transaction is detected as a trigger transaction when the first transaction corresponds to purchasing a flight ticket, purchasing a cruise ticket, purchasing a train ticket, purchasing a bus ticket, reserving a rental car, reserving an event space, booking a hotel space, booking a motel space, or booking a hostel space; obtaining contextual data for the first transaction, wherein the contextual data is obtained from a third-party supplier; receiving, after more than a week encompassing a plurality of unrelated transactions, a second transaction; determining by using the contextual data that the second transaction and the first transaction are part of an experience set; and displaying a summary of the experience set, wherein the summary includes each transaction and total transaction amount. The displayed summary may also include a descriptive name for the experience set.

The embodiments described above have various advantages. For example, instead of a bare list of distinct transactions, groups of transactions representing common experiences are presented, which makes the presentation of transactions more similar to how humans think about their money. For instance, instead of distinct "transportation," "entertainment," and "dining" transactions, a user may be presented with a "night out" experience, which would encompass the individual transactions. That makes it easier for a user to understand when and how expenses are incurred. In addition, providing a list of transactions according to their authorization times, instead of settlement dates, enables a more accurate and precise understanding of the transactions. Grouping of transactions in a user-centric way, rather than a merchant-centric way, improves users' ability to manage their expenses. Furthermore, because the created experience sets may incorporate data beyond what may be available in an isolated transaction, such as the context of the transaction, its precise time, its precise location, its relationship to other transactions, its secondary attributes that may relate to future plans, and an experience set's higher order relationship to other experience sets, users gain insights that they would not have been able to gain from pre-existing lists of transactions.

In one example, a method of generating a user interface may include receiving, at a processor, first data indicative of a first plurality of transactions by a user and processing, by the processor, the first data to generate first behavioral information describing the user. The method may include causing, by the processor, the first behavioral information to be displayed by an interactive user interface. The method may include receiving, at the processor, a user input made in response to the first behavioral information being displayed through the interactive user interface and analyzing, by the processor, the user input to generate user preference information indicating a relationship between the first user input and the first behavioral information. The method may include receiving, at the processor, second data indicative of a second plurality of transactions by the user and processing, by the processor, the second data and the user preference information to generate second behavioral information describing the user. The method may include causing, by the processor, the second behavioral information to be displayed by the interactive user interface. The second behavioral information may be displayed differently from the first behavioral information by the interactive user interface as a result of the processing of the second data and the user preference information together.

In some embodiments, at least one of processing the first data and processing the second data may include identifying a plurality of peer users having at least one characteristic in common with the user, receiving peer data indicative of a plurality of transactions by the peer users, and generating peer behavioral information describing the peer users. The method may further include causing, by the processor, the peer behavioral information to be displayed by the interactive user interface. In some embodiments, the method may further include preventing, by the processor, information identifying the peer users from being included in the peer behavioral information displayed by the interactive user interface.

In some embodiments, at least one of processing the first data and processing the second data may include using at least one script to generate at least one card. The interactive user interface may include the at least one card. In some embodiments, the method may further include generating, by the processor, the at least one script.

In some embodiments, analyzing the user input may include identifying a portion of the first behavioral information that is of interest to the user as at least a portion of the user preference information. Processing the second data and the user preference information may include selecting a portion of the second data similar to the portion of the first behavioral information that is of interest to the user as at least a portion of the second behavioral information.

In some embodiments, analyzing the user input may include identifying a portion of the first behavioral information that is of no interest to the user as at least a portion of the user preference information. Processing the second data and the user preference information may include excluding a portion of the second data similar to the portion of the first behavioral information that is of no interest to the user from the second behavioral information.

In some embodiments, the method may further include causing, by the processor, an option to adjust a user account setting based on at least one of the first behavioral information and the second behavioral information to be displayed by the interactive user interface. The method may further include receiving, at the processor, a user command in response to the option. The method may further include adjusting, by the processor, the user account setting based on the user command.

In another example, a financial account server device may include a processor and a non-transitory memory in communication with the processor. The memory may store instructions that, when executed by the processor, cause the processor to perform processing. The processing may include processing a first plurality of transactions by a user. The processing may include analyzing the first plurality of transactions to generate first behavioral information describing the user. The processing may include sending the first behavioral information to a user device for display by an interactive user interface of the user device. The processing may include receiving, from the user device, a user input made in response to the first behavioral information being displayed through the interactive user interface. The processing may include analyzing the user input to generate user preference information indicating a relationship between the first user input and the first behavioral information. The processing may include processing a second plurality of transactions by the user. The processing may include analyzing the second plurality of transactions and the user preference information to generate second behavioral information describing the user. The processing may include sending the second behavioral information to the user device for display by the interactive user interface. The second behavioral information may be displayed differently from the first behavioral information by the interactive user interface as a result of the analyzing of the second plurality of transactions and the user preference information together.

In some embodiments, at least one of analyzing the first plurality of transactions and analyzing the second plurality of transactions may include identifying a plurality of peer users having at least one characteristic in common with the user, receiving peer data indicative of a plurality of transactions by the peer users, and generating peer behavioral information describing the peer users. The instructions may further cause the processor to perform processing including sending the peer behavioral information to the user device to be displayed by the interactive user interface. In some embodiments, the instructions may further cause the processor to perform processing including preventing information identifying the peer users from being included in the peer behavioral information displayed by the interactive user interface.

In some embodiments, at least one of analyzing the first plurality of transactions and analyzing the second plurality of transactions may include using at least one script to generate at least one card for display by the interactive user interface. In some embodiments, the instructions may further cause the processor to perform processing including generating the at least one script.

In some embodiments, analyzing the user input may include identifying a portion of the first behavioral information that is of interest to the user as at least a portion of the user preference information. Analyzing the second plurality of transactions and the user preference information may include selecting a portion of the second data similar to the portion of the first behavioral information that is of interest to the user as at least a portion of the second behavioral information.

In some embodiments, analyzing the user input may include identifying a portion of the first behavioral information that is of no interest to the user as at least a portion of the user preference information. Analyzing the second plurality of transactions and the user preference information may include excluding a portion of the second data similar to the portion of the first behavioral information that is of no interest to the user from the second behavioral information.

In some embodiments, the instructions may further cause the processor to perform processing including sending data to the user device causing an option to adjust a user account setting based on at least one of the first behavioral information and the second behavioral information to be displayed by the interactive user interface, receiving a user command from the user device in response to the option, and adjusting the user account setting based on the user command.

In another example, a user device may include a display, an input device, a processor in communication with the display and the input device, and a non-transitory memory in communication with the processor. The memory may store instructions that, when executed by the processor, cause the processor to perform processing. The processing may include sending data requesting a first plurality of transactions by a user to a financial account server device. The processing may include receiving first behavioral information based on the first plurality of transactions from the financial account server device. The processing may include displaying an interactive user interface including the first behavioral information on the display. The processing may include receiving a user input made in response to the first behavioral information being displayed on the display through the input device. The processing may include sending data describing the user input to the financial account server device. The processing may include sending data requesting a second plurality of transactions by the user to the financial account server device. The processing may include receiving second behavioral information based on the first plurality of transactions and the data describing the user input from the financial account server device. The processing may include displaying the interactive user interface including the second behavioral information on the display. The second behavioral information may be displayed differently from the first behavioral information by the interactive user interface as a result of analyzing of the second plurality of transactions and the user preference information together by the financial account server device.

In some embodiments, the user input may identify a portion of the first behavioral information that is of interest to the user as at least a portion of the user preference information. The second behavioral information that is displayed differently from the first behavioral information may include a portion of the second data similar to the portion of the first behavioral information that is of interest to the user.

In some embodiments, the user input may identify a portion of the first behavioral information that is of no interest to the user as at least a portion of the user preference information. The second behavioral information that is displayed differently from the first behavioral information may exclude a portion of the second data similar to the portion of the first behavioral information that is of no interest to the user.

In some embodiments, the instructions may further cause the processor to perform processing including displaying an option to adjust a user account setting based on at least one of the first behavioral information and the second behavioral information on the display, receiving a user command through the input device in response to the option, and sending the user command to the financial account server device.

It will be appreciated that features of each of the embodiments discussed above may be freely combined with features taken from any of the other embodiments.

### BRIEF DESCRIPTION OF THE DRAWINGS

Various objectives, features, and advantages of the disclosed subject matter can be more fully appreciated with reference to the following detailed description of the disclosed subject matter when considered in connection with the following drawings, in which like reference numerals identify like elements.
Figure 1 illustrates a graphical user interface (GUI) for introducing the grouping of transactions into an experience set that may be used in a system for managing transactions from a financial services computer network, according to some embodiments of the present disclosure.
Figure 2 is a diagram of an illustrative system for managing transactions from a financial services computer network, according to some embodiments of the present disclosure.
Figure 3 is a diagram of an illustrative system for managing transactions from a financial services computer network, according to some embodiments of the present disclosure.
Figures 4 and 5 are flow diagrams showing processing that may occur within a system for managing transactions from a financial services computer network, according to some embodiments of the present disclosure.
Figure 6 illustrates a GUI having a calendar with graphical elements indicative of total amounts spent for the experience sets in a corresponding day, according to some embodiments of the present disclosure.
Figure 7 illustrates a GUI having a breakdown schematic with graphical elements indicative of the experience category amounts in a time period, according to some embodiments of the present disclosure.
Figure 8 illustrates a GUI having both a scrollable list and a calendar, according to some embodiments of the present disclosure.
Figure 9 illustrates a GUI having a territorial map with transactions of an experience set, according to some embodiments of the present disclosure.
Figure 10 illustrates a GUI having both a scrollable list and a breakdown schematic, according to some embodiments of the present disclosure.
Figure 11 illustrates a GUI having the experience sets within a chosen experience category for a given time period, according to some embodiments of the present disclosure.
Figure 12 illustrates a GUI having the exclusion of each predefined recurring transaction (which is a type of non-discretionary transaction) from each experience category and breakdown schematic, according to some embodiments of the present disclosure.
Figures 13-16 are flow diagrams showing processing that may occur within a system for managing transactions from a financial services computer network, according to some embodiments of the present disclosure.
Figures 17A-17L illustrate GUIs for improved management of transaction data from a financial services computer network when some of the transactions are made over non-contiguous periods of time, according to some embodiments of the present disclosure.
Figures 18-20 are flow diagrams showing processing that may occur within a system for managing transactions from a financial services computer network, according to some embodiments of the present disclosure.
Figure 21 shows a network providing dynamic interfaces according to an embodiment of the present disclosure.
Figure 22 shows a user device according to an embodiment of the present disclosure.
Figure 23 shows a server device according to an embodiment of the present disclosure.
Figures 24A-24L show a dynamic interface according to an embodiment of the present disclosure.
Figure 25 shows an interface generation process according to an embodiment of the present disclosure.
Figure 26 shows an interface updating process according to an embodiment of the present disclosure.
Figure 27 shows an interface generation process according to an embodiment of the present disclosure.

### DETAILED DESCRIPTION

According to some embodiments of the present disclosure, a system for managing transactions from a financial services computer network allows users to better understand when and how their money is spent by, for example, intelligently grouping distinct transactions into human-relatable "experience sets." An "experience set" is a group of transactions that are related to each other in some manner and that collectively reflect an experience of a user. Because humans think of their expenses relative to experiences, embodiments of the present disclosure can allow users to better understand when and how their money is spent in the context of experiences, without needing to review, tag, or categorize individual transactions. That way, instead of having to read through a list of distinct transactions, users can view a timeline of their experiences. As an example, if a user takes a taxi ride in the evening, goes to a restaurant, and goes to a movie afterward, these transactions can be grouped into a "night out" experience set. Similarly, a trip across the country can be displayed as a "trip," and a visit to a restaurant and an ice cream shop around noon can be grouped into a "lunch" experience set. As such, each experience set contains one or more transactions that are related to each other, for example temporospatially or logically, and reflect an experience of a user. An example of a logical relationship is the one between a purchase and the return (e.g., refund) transaction for that purchase. An experience set may group transactions based on time, location, or other factors used to relate multiple transactions.

According to some embodiments of the present disclosure, a scalable system architecture can allow searching for and identifying multiple different kinds of experience sets, using independent business logic for each kind of experience set. The system may use a transaction hub and multiple independent experience matchers. Experience matchers can be readily added or modified to support many different types of experiences. As an example of an experience matcher, a "meals" experience matcher might search for transactions that are within a range of times (e.g., 6 a.m. to 10 a.m.), have certain merchant category codes (e.g., restaurants), are in physical proximity to each other (e.g., based on merchant address), and occur in temporal proximity to each other (e.g., within one hour). Based on the time range, the experience matchers can tag the group of transactions as a breakfast, lunch, or dinner. As more experience types are identified, such as by user research or machine learning, new experience matchers can be easily added to detect these new experiences. Since each experience matcher operates independently from the others and contains its own independent business logic, this provides a scalable solution to the problem of adding new experience matchers over time.

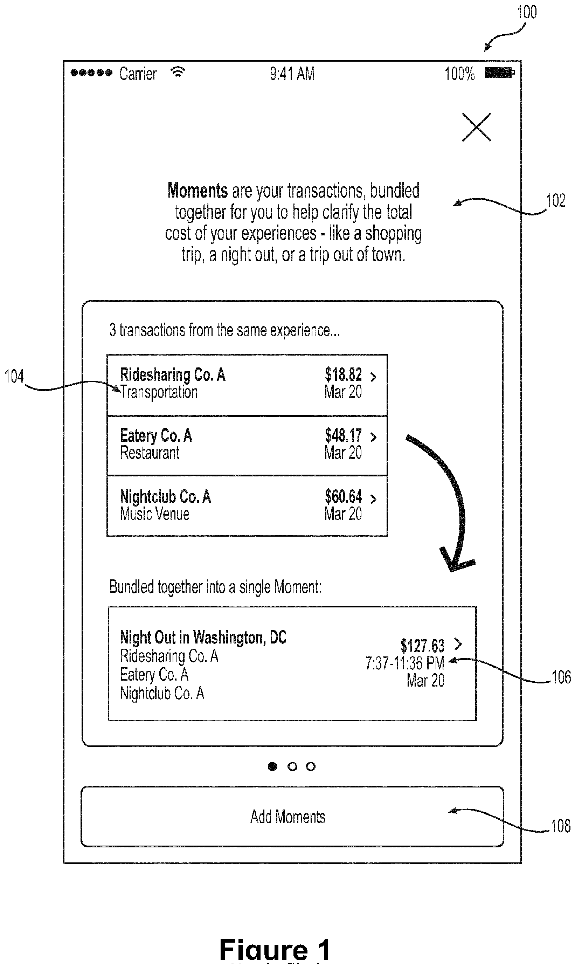

Figure 1 shows an illustrative graphical user interface (GUI) 100 that may be implemented within a system for managing transactions from a financial services computer network, according to some embodiments of the present disclosure. As shown, GUI 100 includes explanatory message 102, at least one transaction 104, experience set 106, and control 108. In the example shown, there are three transactions, for each of which, a name, a merchant category, an amount, and a date are shown. The merchant categories of the transactions in this example are "transportation," "restaurant," and "music venue." These three transactions are grouped into an experience set (referred to as a "moment" in Figure 1). Experience set 106 has the experience name, in this example, "Night Out in Washington, DC." In addition to a name, experience set 106 includes the names of its constituent transactions ("Ridesharing Co. A," "Eatery Co. A," and "Nightclub Co. A" in this example), the sum of those transaction amounts (or the "experience set amount") ($127.63 in this example), its time span (7:37-11:36 p.m. in this example), and its date (Mar. 20 in this example). In some embodiments, GUI 100 may be displayed to a user for introductory purposes, such as before a user gets accustomed to using transaction management via experience sets after which a user may disable the display of GUI 100.

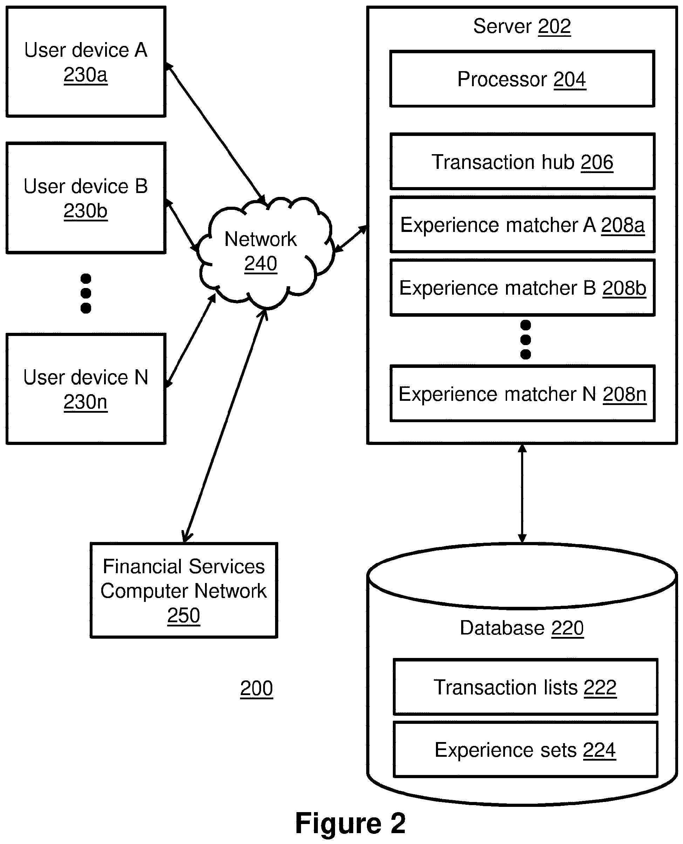

Figure 2 shows a system for managing transactions from a financial services computer network, according to some embodiments of the present disclosure. "Financial services computer network" as used herein refers generally to one or more computer networks associated with any one or more financial service providers including banks, credit card providers, or other financial service providers where a user may have an account associated with payment transactions. The illustrative system 200 includes one or more user devices 230a, 230b ... 230n (230 generally) coupled to server 202 via network 240. The system also allows communication with financial services computer network 250 via network 240. Server 202 may include processor 204, transaction hub 206, and one or more experience matchers 208a, 208b ... 208n (208 generally). System 200 also includes database 220 coupled to server 202. Database 220 may include transaction lists 222 and experience sets 224. The various components of system 200 may be connected as shown in Figure 2, or in any other suitable manner. The system components may be connected by one or more wireless or wireline computer networks.

User devices 230 may include smartphones, tablets, or other mobile devices configured to install and run user applications (apps). User devices 230 may also include laptop or desktop computers. User devices 230 may include one or more processors, hardware (e.g., touchscreen device) and software to receive input from and to display user interfaces to a user, and local storage. In some embodiments, user device 230 may run a money-management application that communicates with server 202 to retrieve experience sets identified within a list of transactions. In some embodiments, transaction hub 206 may include an application programming interface (API) via which user device 230 can issue various requests disclosed herein.

Transaction hub 206 may be configured to receive a transaction list from a financial services computer network, from a user device, or from a database (e.g., transaction lists 222). Transaction hub 206 may also be configured to receive transactions one by one, or in any other groupings, from financial services computer network 250. For example, in response to a user authorizing a transaction, financial services computer network 250 may send the transaction in real time to transaction hub 206. A "transaction list" as used herein includes lists that have at least one transaction (e.g., 1, 2, 3 ... 10 ... 20 ... 100 ... 200 ... 1000). Once it has a transaction list, with one or more transactions either received at once or received at potentially varying times, transaction hub 206 may send a request to one or more experience matchers 208 to identify one or more experience sets within the transaction list. The experience sets to be identified by experience matchers 208 may be preliminary, especially when additional follow-on transactions building up the transaction list are later received. As such, the collection of experience sets identified within a transaction list may be dynamic; it may change and evolve as the transaction list changes or as parameters affecting the matching process are modified (e.g., by a user, based on personal preferences). Transaction hub 206 may be configured to receive one or more identified experience sets from the experience matchers, and to store the identified experience sets in database 220, for example in experience sets 224. Transaction hub 206 may further be configured to store the transaction list in transaction lists 222. Experience sets 224 and transaction lists 222 need not be structurally distinct tables; the sets and the transactions may be relationally identified through flags that indicate which transactions belong in which experience sets.

In some embodiments, transaction hub 206 sends the same transaction list to a plurality of experience matchers. After processing by the experience matchers, transaction hub 206 may receive one or more identified experience sets from one or more of the experience matchers. As an example, after sending a transaction list containing transactions 1 through 8, transaction hub may receive an identified experience set from experience matcher A 208a for transactions 4-6 and two additional identified experience sets from experience matcher B 208b for transactions 1-3 and 7-8. As such, the eight transactions would be grouped into three experience sets of two types. In some embodiments, transaction hub 206 may receive conflicting experience sets from the experience matchers. This can happen when two or more received experience sets share at least one transaction (e.g., different alternative groupings of transactions or different experience set assignments). For such cases, transaction hub 206 may be configured to resolve the conflicts, for instance by also receiving a match score from each of the experience matchers. Transaction hub 206 may also be configured to resolve conflicts by applying a predetermined hierarchy of priorities for example, a "trip" may be chosen to be more meaningful than "lunch" if a transaction is matched as both a lunch and as a trip. The hierarchy may be determined by user research, user feedback, or machine learning. The scores can be used by the transaction hub to choose between different experiences set assignments, or to create an optimal grouping of transactions. In some embodiments, the transaction hub may group the transactions into sub-lists, and send to the experience matchers the sub-lists for identifying an experience set that is constrained to include all of the transactions in the sub-list.

Experience matchers 208 may each contain a processor and a memory. Experience matchers 208, in some embodiments, need not include a dedicated processor; instead, they may run on one or more separate processors, which may be individual or shared. Experience matchers 208, in various embodiments, run as distinct processes regardless of the type of processor used. This provides several benefits, including scalability (as more experience matchers are added, the transaction hub isn't directly impacted), asynchronicity (the experience matchers can work separately on different timescales without depending on each other or the transaction hub), and the ability to swap in or out experience matchers (e.g., if they crash, if their update is needed, for some other reason). In some embodiments, the experience matchers may rely on instructions stored in memory as well as a local database of transaction history to reference as new transactions come in. However, implementation may also include the ability to call out to the network to reference other sources of information, such as a machine learning model or a more detailed history of a user's behaviors and transactions, in order to better identify experience sets.

Experience matchers 208, in some embodiments, are configured to receive a list of transactions, identify one or more experience sets within the list, and return the one or more identified experience sets. Experience matchers 208 may be configured to receive the list of transactions either all at once, or to receive transactions one by one (e.g., individually or in groups, such as when a user makes them) and thereby process a transaction list that is adjusted as new transactions are received (e.g., in real time). In some embodiments, each experience matcher is configured to identify only one type of experience set. As such, new experience matchers may be added easily as they are identified through user feedback or machine learning. In some embodiments, the experience matchers are constrained to identify an experience set that would include all of the transactions within a received sub-list of transactions.

As one specific example of a basic implementation of an experience matcher, a "meals" experience matcher, which looks for meals, is provided as follows. This implementation can be augmented to utilize machine learning, user feedback, etc. For example, the time ranges referenced in the meals experience matcher can be adjusted based on machine learning to show what times of day the users tend to purchase meals. The meals experience matcher provided in this example is based on time, location, and previous transaction history. This experience matcher may keep a local data store of transaction history for a given user. When a given transaction is received by this meals experience matcher, the meals experience matcher may perform the following steps:

| |
|---|
| 1. Checks that the transaction is within a set of allowed merchant category codes (MCCs). That set might include code 5812 (eating places, restaurants), code 5813 (drinking places), etc. If the transaction is not in the set, the experience matcher determines it's not part of a meal, at least within the scope of this step. |
| 2. If the transaction is within the MCC set, the experience matcher then checks the time of day that the transaction occurred, and determines whether the transaction occurred within certain time intervals. For breakfast, the transaction may have to occur between around 6 a.m. to 10 a.m. For lunch, the transaction may have to occur between around 11 a.m. to 2 p.m. For dinner, the transaction may have to occur between around 5 p.m. to 8 p.m. If the transaction is not within an allowed time interval, the experience matcher may determine it is not part of a meal. |
| 3. If the transaction is within the MCC set and within an allowed time interval, the experience matcher may determine that it is a meal experience set. But the experience matcher may also look in the local data store to see if there was another matching meal recently. If so, the transaction is appended to that previous meal experience set. |
| a. For example: if transaction 1 comes in at 11:30 a.m. at Restaurant A, it may be classified as a lunch. The experience matcher reports back that transaction 1 belongs in a lunch experience set. |
| b. If transaction 2 then comes in at 11:45 a.m. at Ice Cream Vendor B, it is a lunch *and* it is the same lunch as transaction 1. The experience matcher may report back that transaction 1 and 2 belong *together* in the same lunch experience set. |
| 4. Then,regardless of whether a meal experience set was found or not, the transaction may be added to the local data store of transaction history for future reference. |

As another specific example of a basic implementation of an experience matcher, a "human category" experience matcher, which condenses complex categories into a smaller set of simple categories and also groups based on time/location is provided as follows. The human category experience matcher aims to condense transaction categories from MCCs-which are merchant-facing, often inexplicable categories-to human-understandable categories, and it also aims to aggregate transactions that are closely related in time/location. This provided example is a "grocery shopping trip" where a user visits two grocery stores to get all of his/her items. The experience matcher may keep a local data store of transaction history for any given user. When any given transaction comes into the Human Category experience matcher, it may perform the following steps:

| |
|---|
| 1. The experience matcher may contain a mapping table (in memory or in a database) which maps all possible MCCs (of which there may be hundreds or more) to a pre-determined list of human categories (of which there may be approximately ten or so in this example). The experience matcher may map the transaction to the human category, and may call the resulting set a human category experience set. |
| 2. The experience matcher then may check the local data store to see if any other transactions belonging to that human category occurred within the last hour or two (this is configurable). If so, the experience matcher may determine that the new transaction belongs to the same human category experience set from before. |
| a. Example: transaction 1 comes in at 2 p.m. at Food Retail Co. A (code 5411 - "grocery stores, supermarkets"). The experience matcher determines this is a "groceries" category ("groceries" is one of ten or so human categories in this example) and reports this back to the transaction hub. |
| b. Transaction 2 comes in at 2:45 p.m. at Food Retail Co. B (also code 5411). The experience matcher may determine that this is a "groceries" category, and also may see that there was a previous groceries experience set from earlier. The experience matcher may report back that transaction 1 and transaction 2 both belong in the same "groceries" experience set. |

The parameters defining the exemplified meals experience matcher and human category experience matcher, such as the MCC sets and the time ranges, may be modified. Similar parameters for experience matchers other than the two particular ones detailed here may also be modified, for example as recalibrated default values, as updated suggested values, or as values chosen by users. Other than parameters for identifying an experience set, other parameters affecting the list of transactions may also result in changes to the identified experience sets. For example, while a chosen time range of 6 a.m. to 10 a.m. may directly affect identification of a breakfast experience set, an effective time-restriction preventing some experience sets from spanning more than a certain number of days (e.g., 1, 2, 3, 7, 30), such as through sending a list of transactions only for one full day to the experience matchers, might also indirectly affect the identified experience sets. New experience matchers may be added, other ones may be deleted, some may be merged, and some may be split into more specific experience matchers, for example based on user research or machine learning. Many of these modifications may be carried out with ease, in part because the experience matchers are independent from each other.

Experience sets may include an experience set name, an experience set date (or date range), an experience set time span, and an experience set amount (corresponding to the total monetary expenditure of the constituent transactions). Experience set names may include "lunch," "night out," "trip," and many others, and may also include names chosen by a user. In some embodiments, the constituent transactions of an experience set temporospatially relate to each other, in other words they occur in physical proximity (e.g., 1 mile, 2 miles, 3 miles, 4 miles, 5 miles, 6 miles, 7 miles, 8 miles, 9 miles, 10 miles) to each other within a certain time range (e.g., 1 hr, 2 hrs, 3 hrs, 4 hrs, 5 hrs, 6 hrs, 7 hrs). Each transaction may have a transaction name, a transaction time, a transaction place, and a transaction amount.

Experience sets may be created, in some embodiments, by using various transaction attributes, such as location and time. The sets may also be created by relying on correlations between various transactions, as obtained from analysis of one or more users' transaction histories. In some embodiments, the experience sets are created using clustering algorithms (e.g., k-means, UPGMA, DBSCAN, or any other known algorithm). The dimensionality of the transaction attributes for clustering may be two (e.g., time and location) or it may be higher than two (e.g., time, location, and cross-correlation value). For some embodiments, processing of transaction data includes making use of information related to the authorization request. This enables, for example, using the time that a merchant or point of sale has requested authorization for transaction, which confers real-time capabilities for recognizing a particular time a transaction has occurred so as to distinguish between lunch and breakfast, etc. Usage of authorization time as opposed to the usual settlement time improves over pre-existing methods of handling transaction lists. In addition, the transaction data may be processed to obtain the particular location that a transaction has occurred, which also helps with improving accuracy of grouping transactions into experience sets. In some embodiments, the financial services computer network 250 may obtain the authorization time on the backend using a third party payment processor (not shown here). In contrast, conventional financial service providers may not be able to obtain the authorization time which results in inaccurate grouping of transactions into experience sets. Processing the transaction data to gain insights on the location of merchants is further described in U.S. Patent Application No. 14/162,850, filed on January 24, 2014, which is hereby incorporated by reference in its entirety.

Database 220 may include non-volatile memory configured to store data for transaction lists and experience sets. In some embodiments, database 220 may include a relational database having one or more tables to store users, transaction lists, and experience sets. Transaction lists 222 and experience sets 224 may each have various associated attributes, such as user, name, date, time, place, and amount. Some of the attributes may be singular values (e.g., $10), while some may be arrays or matrices (e.g., two coordinate values for location, or multiple values for the constituent transactions). The tables may reference each other, instead of replicating data. As such, database 220 may contain the information for transactions and experience sets in a common table, rather than in separate transactions lists 222 and experience sets 224.

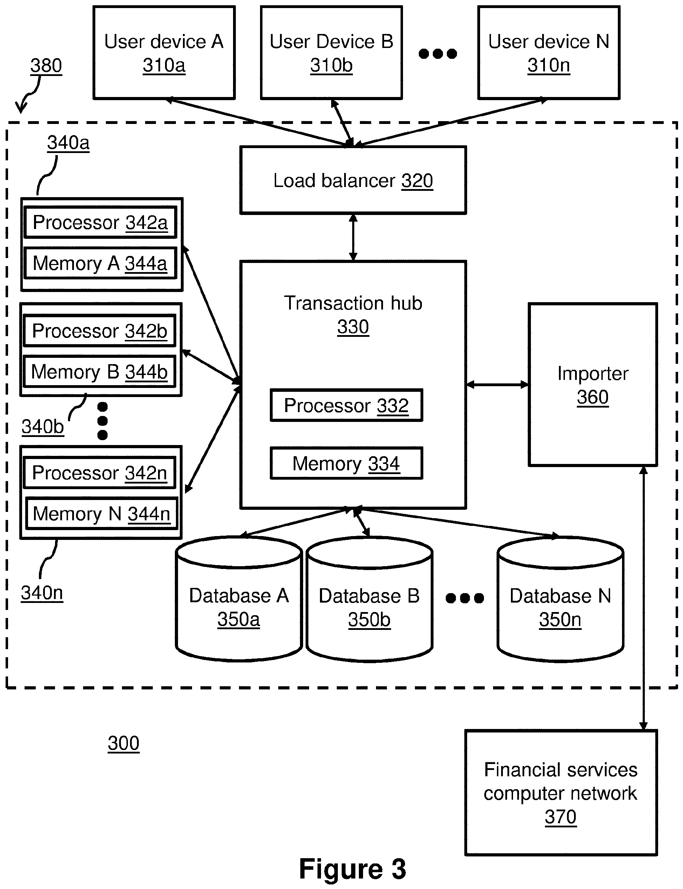

As shown in Figure 3, the server and the database may form part of server architecture 380. The server architecture may include transaction hub 330 coupled to importer 360 for receiving transactions from financial services computer network 370, and may include load balancer 320, coupled to transaction hub 330, for communicating with user devices 310. The transaction hub may further be coupled to databases 350 and to experience matchers 340.

Transaction hub 330 may receive transactions in real time from importer 360, and may send them over to the experience matchers 340 to discover experience sets, and then may store the transactions and experience sets in databases 350 and make them available as an API for user devices 310 to fetch experience sets to display to users. In a sense, transaction hub 330 acts as a coordinator. Transaction hub 330 may also standardize the formats of different transaction types (e.g. bank transactions and credit card transactions) as they may have different data formats as compared to those of different financial services computer networks 370.

Importer 360 is a tool that may import transactions in real time from financial services computer network(s) 370. The implementation details can be varied, for example it could be scheduled to call an API or a live streaming data platform. There may be different variants of the importer to talk to different financial services computer networks (e.g., a "credit card transaction importer" that can receive credit card transactions, vs. a "bank transaction importer" that can receive bank transactions). For credit card transactions, importer 360 may also serve the role of reconciling initial card "authorizations" (which provide a precise timestamp such as "July 2, 2018, 10:23AM" - but are not official charges to a customer yet) with the subsequent transaction "posts" (which are officially charged to a customer, but only provide a date with day-precision such as e.g. "July 2, 2018"), to ensure that accurate timestamp data is available on transactions possible for the experience matchers to utilize.

Experience matchers 340 may receive transactions from the transaction hub in real time (as they are relayed to the transaction hub), perform discrete domain-specific logic to identify experience sets (each matcher knows how to look for one or more specific experience set types), and report the experience sets back to transaction hub 330 for storage in databases 350. In some embodiments, each experience matcher 340 includes its processor 342 and its memory 344. In some embodiments, processors can be external to the experience matchers and can be shared or pooled among experience matchers. In some embodiments, transaction hub 330 includes processor 332 and memory 334. In some embodiments, processor 332 may be external to transaction hub 330, and may be a shared processor.

Load balancer 320 is a tool that can be used in large scale computing. It helps to distribute requests from large numbers of user devices 310 to multiple running instances of transaction hub 330 (and experience matchers 340, importer 360, etc.) to optimize resources, maximize throughput, and minimize response time.

Databases 350 may store both transaction history and experience set information (including metadata about the experience sets) for reference and access by transaction hub 330. A user device 310 may be a computer, smartphone, tablet, web browser, etc.

Using multiple databases may allow for scaling the architecture. Using multiple experience matchers may allow for scaling per host (e.g., through multiprocessors or multithreads) and scaling across hosts (e.g., for clustering/distributed processing). Using multiple separate experience matchers may also allow for easily scaling the number and type of experience sets that can be processed. For example, if feedback from an individual user requests dividing a single experience set type (e.g., "night out") into more granular experience set types (e.g., "Friday night out," "Saturday night out," and "Sun-Thu night out"), such a change in the experience set numbers and types can be accommodated within the scalable architecture. In some embodiments, different users may use different experience set types, and such preferences may either be received from a user device or stored in database 350. Similarly, new experience set types can be added by incorporating new experience matchers into the server architecture.

In an implementation, experience matchers may be added manually. However, they can also be added or adjusted automatically. Machine learning models (e.g., by continuous learning or reinforcement learning or retraining) can be utilized to update an experience matcher in real time. It is also possible to design a generic experience matcher whose main logic is to "consult the machine learning model for [xyz] trend" and as the machine learning model discovers new trends, to dynamically spin up a new instance of this generic experience matcher tuned to look for that specific trend. Some implementations of the experience matchers may use hardcoded logic (e.g. the meal time ranges), but these may also be designed to be adjustable based on user experience research or user feedback. For example, if users report that they often have lunch at 10:30 a.m., the experience matcher could be adjusted (e.g., in real time) to account for this. Machine learning might also show that users start eating lunch around 10:30 a.m. and adjust the experience matchers accordingly.

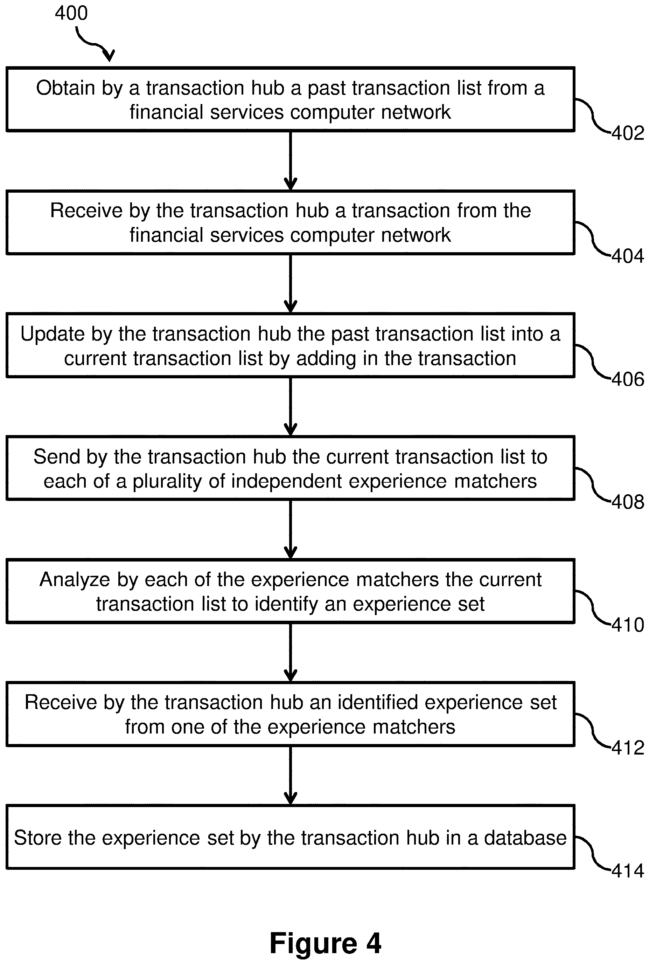

Figure 4 shows method 400 for forming an experience set from a transaction list received from a financial services computer network, according to some embodiments of the present disclosure. Method 400 may be implemented within a server, such as server 202 shown in Figure 2. At block 402, a transaction hub may obtain a past transaction list from a financial services computer network. In some embodiments, the transaction hub may obtain the past transaction list from a database or a user device. Once the transaction hub updates the past transaction list into a current transaction list (block 406) upon receiving a new transaction (block 404), it may send the current transaction list to multiple experience matchers (block 408). This, in some embodiments, reflects the ability of the system to process transactions in real time, for example by sending an updated transaction list after receipt of each new transaction. In some embodiments, transaction hub may send a past or current transaction list to the experience matchers at certain times (e.g., 10 p.m. each day) or with certain periods (e.g., every 2 hours) or after certain events (e.g., receipt of an update, such as a new transaction). At block 410, each of the multiple experience matchers analyzes the current transaction list to identify an experience set. In some embodiments, each experience matcher is configured to search for only one type of experience set, although there may be more than one experience matcher that searches for the same type of set to attain scalability. After an experience matcher identifies an experience set within the transaction list, the transaction hub may receive that identified set (e.g., the information for the experience set, such as its constituent transactions) at block 412, and then store it at block 414 in a database. The information that the transaction hub receives from the experience matcher may include the name, date(s), and time range for the experience set. In some embodiments, the name, date(s), and time range of the identified experience set may also be generated by the transaction hub, without needing to receive those from an experience matcher. In some embodiments, the transaction hub pre-processes a transaction list (current or past) into sub-lists, and then sends one or more of the sub-lists to the multiple experience matchers so that they can find an experience set that contains all of the transactions in the sub-list. In some embodiments, the transaction hub may send to the experience matchers a longer transaction list that may contain more than one experience set.

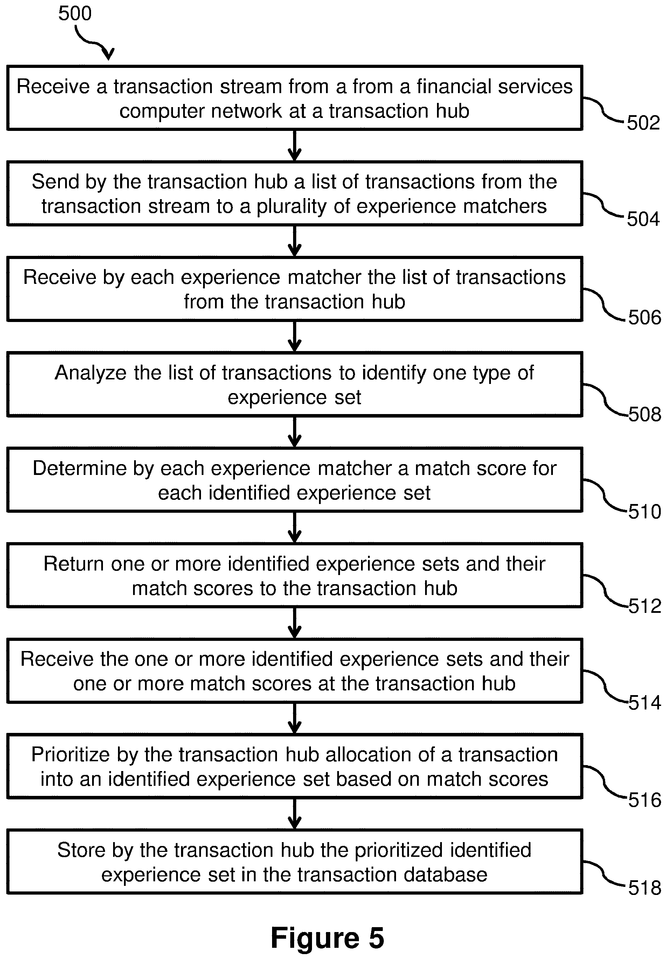

Figure 5 shows method 500, implemented within a scalable system architecture, for generating a humanized experience set from a list of transactions, according to some embodiments of the present disclosure. Method 500 may be implemented within a server architecture such as server architecture 380 shown in Figure 3. At block 502, a transaction hub of the server may receive a transaction stream from a financial services computer network, and then send a list of transactions from the stream, at block 504, to multiple experience matchers of the server. The transaction stream refers to an updated collection of transactions received from a source such as a financial services computer network, which may be updated continually or periodically or on an event basis. For example, for a given exemplary start date (which can be changed) of the beginning of the month, the transaction stream includes the continually growing list of transactions since the beginning of the month up until the time that processing within the system occurs. The list of transactions that can be obtained from this transaction stream may contain all of the transactions of the transaction stream in some embodiments; however, once obtained from the transaction stream for processing (e.g., for analyzing to identify an experience set within), a given transaction list has a limited number of transactions, even though a new updated list of transactions may then be generated from the transaction stream for further processing (e.g., by sending a new list of transactions to the experience matchers, sending one or more new transactions to be appended to the list of transactions to create a new list of transactions). In some embodiments, the list of transactions contains fewer transactions than the transaction stream (e.g., the transactions for a given day). The list of transactions may be obtained from the transaction stream through a variety of ways, for example by taking the last predetermined number of transactions (e.g., 10, 20, 30, 40, 50, 60, 70) or transactions for a recent time span (e.g., the last 24 hours, the last calendar day, the last 12 hours, the last 6 hours). Once each experience matcher receives the list of transactions at block 506, it may analyze the transaction list to identify its type of experience set within it at block 508, and determine a match score for any identified experience sets at block 510. After a return of one or more identified experience sets by the experience matchers at block 512 and their receipt at the transaction hub at block 514, the transaction hub may run a prioritization routine at block 516 to obtain an optimal (e.g., based on user feedback or preference or past experiences) grouping of transactions into experience sets, and then store at block 518 the found experience sets in a database.

In some implementations having a small set of experience set types, the prioritization may be hard-coded based on the general premise that "special is better than ordinary". For example, a user may have multiple meals every day; so, the user will see "meal" experience sets frequently. If the user is on a trip across the country, the user will also be eating meals-but, the trip is far less frequent (more special) than meals, so the prioritization may favor the trip over meals. The least prioritized experience set type, in some embodiments, may be the human category (effectively, in these embodiments, a fallback to ensure every transaction has some sort of human-understandable meaning), and nights-out and trips, in some embodiments, are the most prioritized experience set types. Without being limited to such hierarchical schemes, prioritization may also be based on user feedback and machine learning. The transaction hub may retain information about matching experience sets for a transaction; so, if the user provides feedback that he/she prefers a different prioritized experience set (e.g., by manually editing the experience set), the system could incorporate this feedback and provide personalized prioritization on a per-user basis. The system could also observe large scale trends in edited experience sets to tweak the overall prioritization scheme over time. When new experience set types are added, they could be added with an initial relevance indicator (e.g., something like "special" or "medium" or "ordinary") to provide some initial prioritization, but that prioritization could be adjusted by the system over time in response to user feedback or machine learning.

In some embodiments, the present disclosure provides systems and methods for improved visualization of transaction lists, as further explained below.

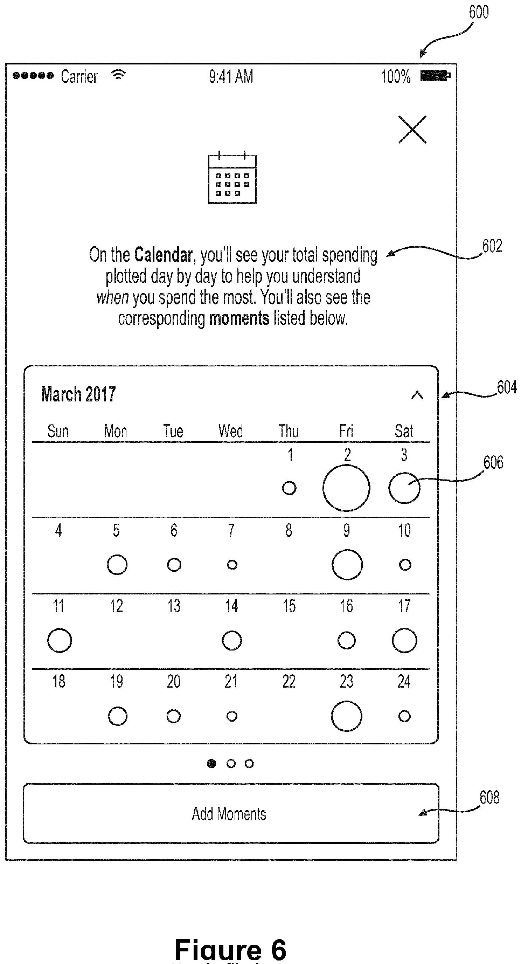

Figure 6 illustrates GUI 600 that has a calendar view associated with experience sets, according to some embodiments of the present disclosure. As shown, GUI 600 includes an explanatory message 602, which may be disabled by a user, and calendar 604. On the calendar, graphical element 606 indicates the relative total dollar amount of all experience sets in the day under which it is placed. In the shown embodiment, the graphical element is a disk, and has an area proportional to the total experience set amount in that day. Also shown is control 608, which allows a user to request display of experience sets covered by the days shown in the calendar. One way in which GUI 600 may improve over existing interfaces lies in its use of authorization times, which may be obtained from a financial services computer network via an importer, and which allow for improved and accurate insights into the spending patterns of a user. The use of precise authorization times, as opposed to the standard settlement times, enables a user to intuitively visualize their transactions in the unique calendar view and gain an understanding of spending relationships that are not available in existing interfaces (e.g., experience set types for which a user spends most; experience set types and how they vary with days of the week, or with other patterns of time).

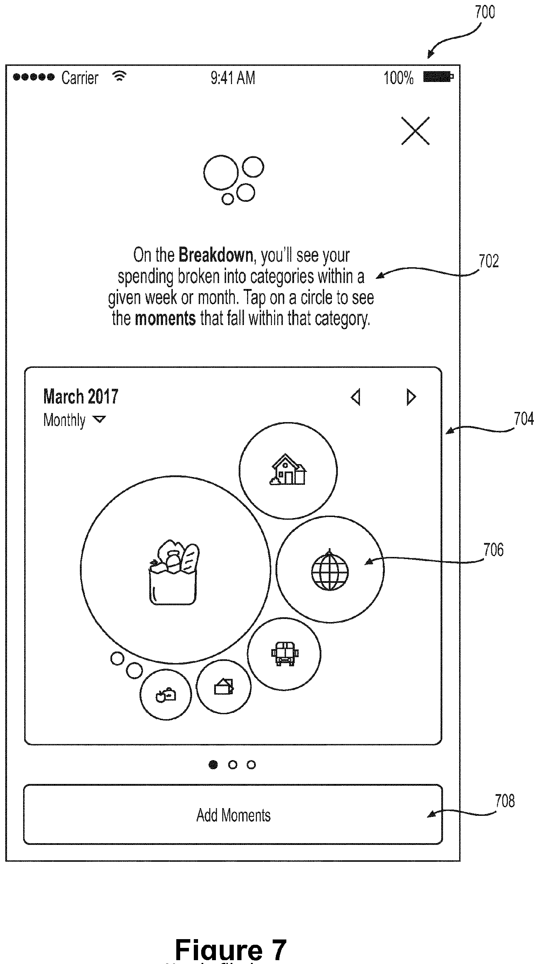

Figure 7 illustrates another example of improved visualization of transaction lists, showing GUI 700 that has a breakdown schematic associated with experience set categories, according to some embodiments of the present disclosure. As shown, GUI 700 includes explanatory message 702, which a user may disable, and breakdown schematic 704. The breakdown schematic contains graphical elements 706 each of which indicates a distinct experience set type and total dollar amount for that experience set type. An experience set type (alternatively, experience set category) is a collection of one or more experience sets each of which has the same type. In some embodiments, it is possible for an experience set type to overlap with or resemble a traditional MCC; however, an experience set type comprises one or more experience sets that reflect a user's experiences rather than being solely or primarily based on individual transactions sharing a merchant-based code or related codes. In some embodiments, GUI 700 allows displaying traditional MCC-based groupings of transactions as well. In some embodiments, users may create their own categories for the experience sets, which can be visualized in GUI 700. Control 708 allows a user to request display of a breakdown of the experience set types covered by the breakdown schematic. In some embodiments, the breakdown schematic is limited to experience sets within a time period (e.g., one week, one month). In some embodiments, an experience set type is a higher order summary of the experience sets. For example, experience set "night out at location X" and "night out at location Y" may both belong to the same experience set type "night out." In contrast to existing interfaces, GUI 700 allows a user to visualize expense categories that are meaningful to a customer, rather than to a merchant. This is, in part, due to the grouping of transactions with precise authorization data (e.g., time, place) by the independent experience matchers into meaningful experience sets, which are further collectively displayed as experience set types in breakdown schematic 704.

In some embodiments, the system may not directly show MCCs to users, because MCCs are merchant-facing and often not as meaningful for users. Therefore, categories are at least conceptually distinct from MCCs, even if they sometimes may appear similar in practice. Instead of MCCs, the systems and methods disclosed herein may use "human categories." As mentioned earlier, in some embodiments there is an experience matcher that maps MCCs to human categories, of which there are around 10 in some embodiments, and which are human-meaningful (categories such as "shopping" or "food"). Some of the human categories may be reminiscent of MCCs - for example, "groceries" is a human category and also MCC 5411 ("grocery stores, supermarkets"). However, other human categories may be more general and may capture multiple MCCs (e.g. "food" is a human category that has many MCCs, like 5812 "eating places, restaurants" and 5814 "fast food restaurants").

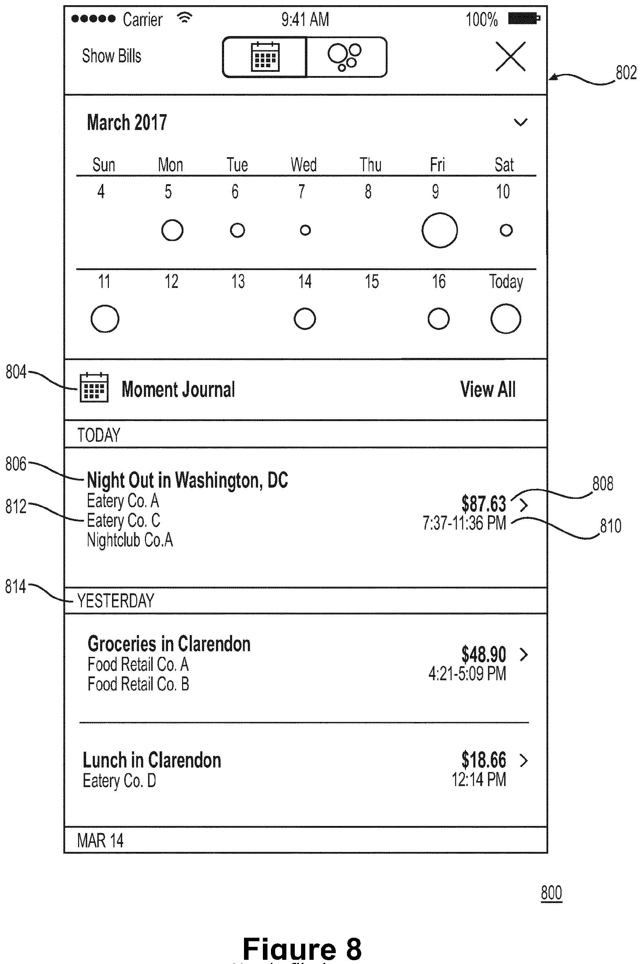

Figure 8 illustrates GUI 800, which has calendar 802 and scrollable list 804 (titled as "Moment Journal" for the end user in this embodiment), according to some embodiments of the present disclosure. Scrollable list 804 includes a listing of dates, such as the shown date 814, and a listing of experience sets. As exemplified by the shown topmost experience set, an experience set may have experience set name 806, experience set amount 808, experience set time span 810, and one or more constituent transactions 812. In some embodiments, a user can choose a date range, according to which the calendar and the scrollable list would be updated to contain experience sets within the chosen date range. For the days in the calendar in which expenses have been incurred, a graphical element (such as graphical element 606 shown in Figure 6) may be shown in the calendar. The graphical element may be indicative of the total amount spent on that day (e.g., via proportional sizing). In some embodiments, as a user chooses (e.g., clicks on, taps on) a date on the calendar, the scrollable list is updated so as to show the experience sets of that day at the top. Similarly, in some embodiments, as a user chooses a date on the scrollable list, the graphical element for that day is differentiated (e.g., highlighted, enlarged, encircled, recolored, flashed) on the calendar. In some embodiments, the scrollable list by default shows only the top few (e.g., two, three) constituent transactions for each experience set. In contrast to the existing interfaces, GUI 800 enables a user to interactively visualize how a particular experience set fits into his/her overall spending pattern.

In some embodiments, a user may activate (e.g., click on, tap on) an experience set to see more details, such as a full list of its constituent transactions. In some embodiments, the GUI may have a territorial map of the experience set, as shown in the figure described next.

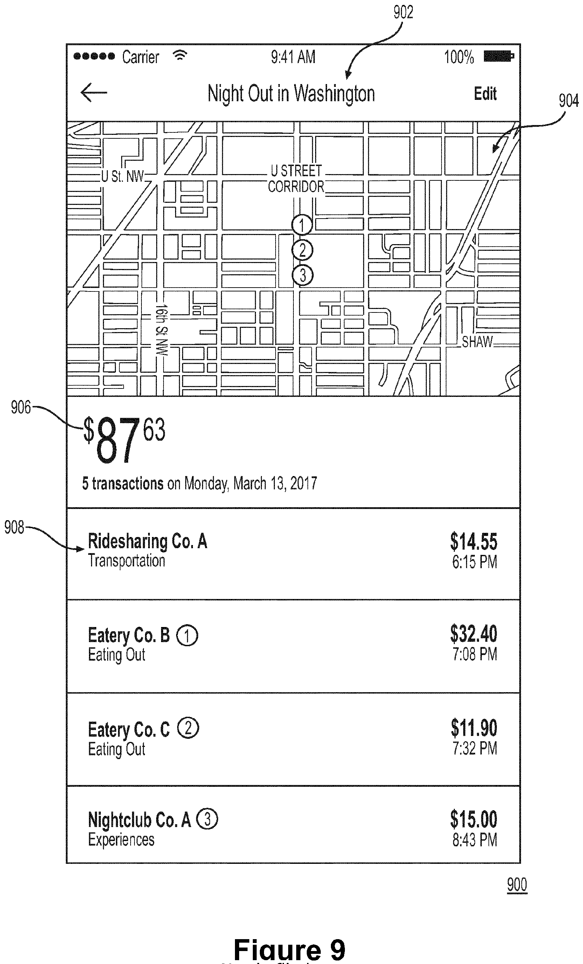

Figure 9 shows GUI 900, according to some embodiments of the present disclosure. GUI 900 includes territorial map 904 and experience set name 902 for which the map is displayed. Under the map, in this embodiment, shown are experience set amount 906 and constituent transactions such as transaction 908. In contrast to existing interfaces, GUI 900 allows users to visualize the spatial attributes of their experiences distinctly from their other experiences.

In some embodiments, in addition to or apart from viewing a calendar, a user may view a breakdown schematic to visualize a transaction list, as shown in the figure described next.

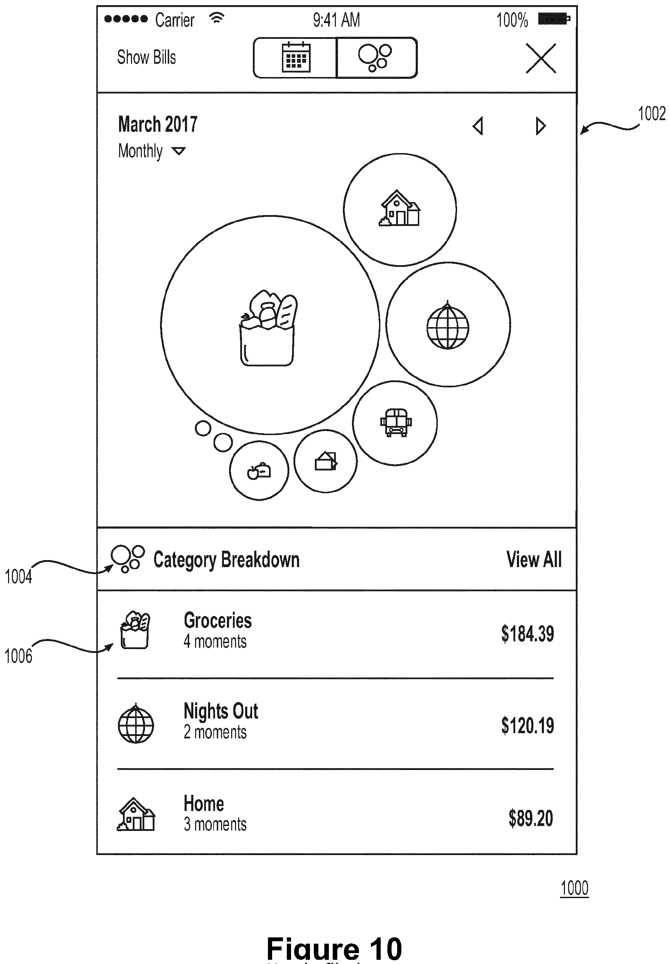

Figure 10 shows GUI 1000, according to some embodiments of the present disclosure. GUI 1000 includes breakdown schematic 1002, category listing name 1004, and experience set categories such as experience set category 1006. In some embodiments, breakdown schematic includes graphical elements that correspond to experience set categories, and which may also be indicative of the total amounts spent in those categories (as shown in Figure 7). In some embodiments, there is a default date window (e.g., current month) that may be changed to any other date window by a user. The displayed breakdown schematic and category listing may be updated to contain the experience sets within the date window and exclude experience sets outside of the date window. In some embodiments, a user may activate an experience set category by clicking on it, tapping on it, etc. and visualize the constituent experience sets within the category. One example of that is shown in the next described figure.

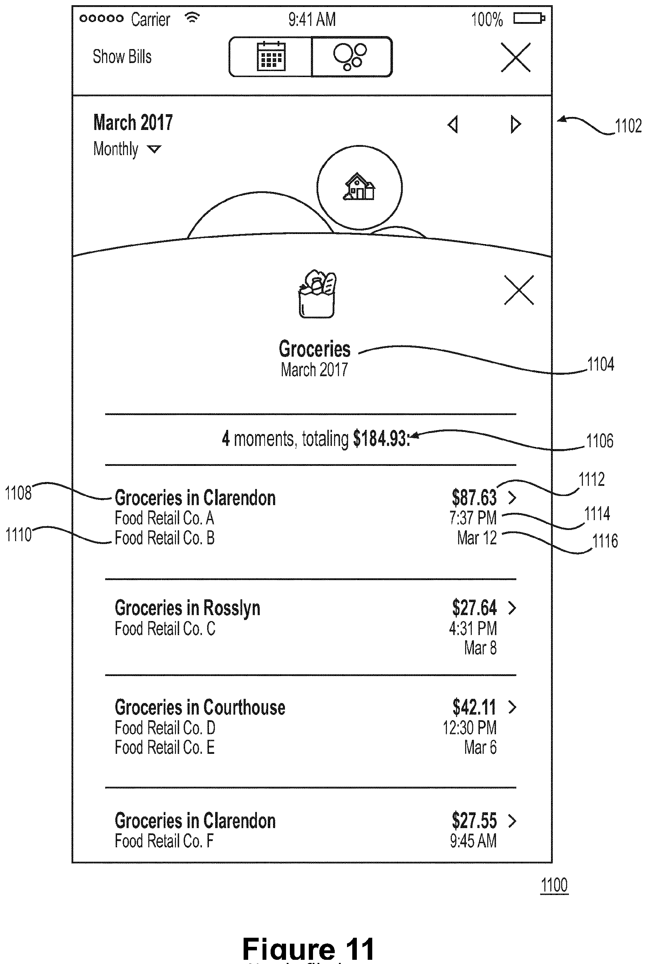

Figure 11 shows GUI 1100, according to some embodiments of the present disclosure. GUI 11 00 includes part of breakdown schematic 1102, experience set category name 1104, experience set category total 1106, and constituent experience sets, such as the topmost shown experience set with experience set name 1108, experience set amount 1112, experience set date 1116, experience set time (e.g., start time, end time, time span) 1114, and the constituent transactions such as transaction 1110. In contrast to existing interfaces, GUI 1100 enables users to visualize their experience set types, which of such experience set types they spend the most on, and what particular transactions each experience set has in a given time frame. The processing of individual transactions by the multiple independent experience matchers, coordinated by the transaction hub, enables creation of experience sets, which further allows collections of experience set types, for example by the transaction hub or even by a user device, to be generated and displayed for providing insights to a user.

In some embodiments, for example those including a calendar, breakdown schematic, scrollable list, category listing, or any combination of these, a user may include or exclude non-discretionary (e.g., recurring) transactions in each of the visualizations. Non-discretionary transactions are those that reflect the expenses that a user would not normally be able to reduce or otherwise change. For example, in some embodiments, rent payments are classified as non-discretionary, since while a user may theoretically relocate or not pay rent, under normal circumstances the user is expected to pay a pre-agreed amount of rent. Similarly, utility bills, gym membership fees, etc. can be classified as non-discretionary. What is classified as non-discretionary may be customized by a user. An example of excluding non-discretionary expenses is shown in the figure described next.

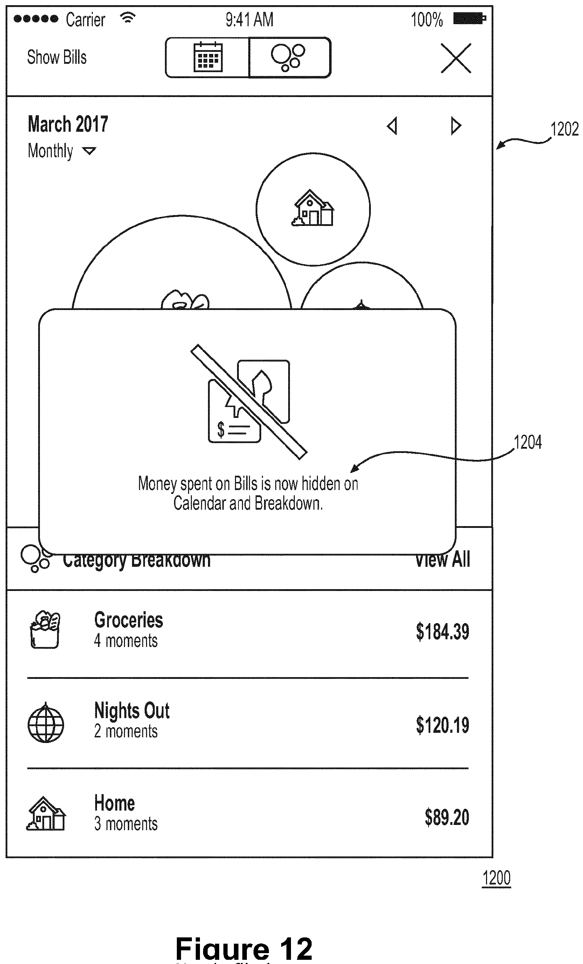

Figure 12 illustrates GUI 1200, according to some embodiments of the present disclosure. GUI 1200 includes breakdown schematic 1202 and message 1204 explaining that bill expenditures are hidden from two types of views. In this example, bill expenses are classified as a recurring transaction (a type of non-discretionary transaction); a user may modify what is classified as a non-discretionary (e.g., recurring) transaction in some embodiments. By removing non-discretionary expenses from visualization, GUI 1200 provides users with greater insight into how they can better take control of their expenses. Since discretionary expenses such as nights-out are more within the control of a user than are non-discretionary expenses such as electricity bills, removing non-discretionary expenses from the visualizations can give new insights to users and aid in understanding of the users' finances.

Discovery of recurring transactions specifically, or non-discretionary transactions generally, can be accomplished via various methods, such as via those involving machine learning based on large sets of a user's transactions. In an implementation, a hardcoded approach that looks specifically for transactions like debits for Bill Pay, etc. can be used. Non-discretionary transaction models may look through lists of a user's past transaction data, and may further factor in the merchant name (the transaction description), the amount, and closeness to a known period (weekly, biweekly, monthly, quarterly, yearly, semimonthly, first of the month, last of the month, and others). These models may also have a given forgiveness range, since a bill may fluctuate a certain amount month to month, or may be paid within a few days of the exact month, give or take. Unexpectedly large fluctuations may be used for other purposes, such as sending an email to the users to give them a heads up about a larger-than-usual bill they were charged. In some implementations, the transactions that are determined to be non-discretionary may then be presented to the user in a simple interface that allows them to confirm or edit the recurrence details, cancel false positives, and add any non-discretionary transactions that may have been missed altogether. These user-corrections may also be used to train and improve the non-discretionary transaction models.

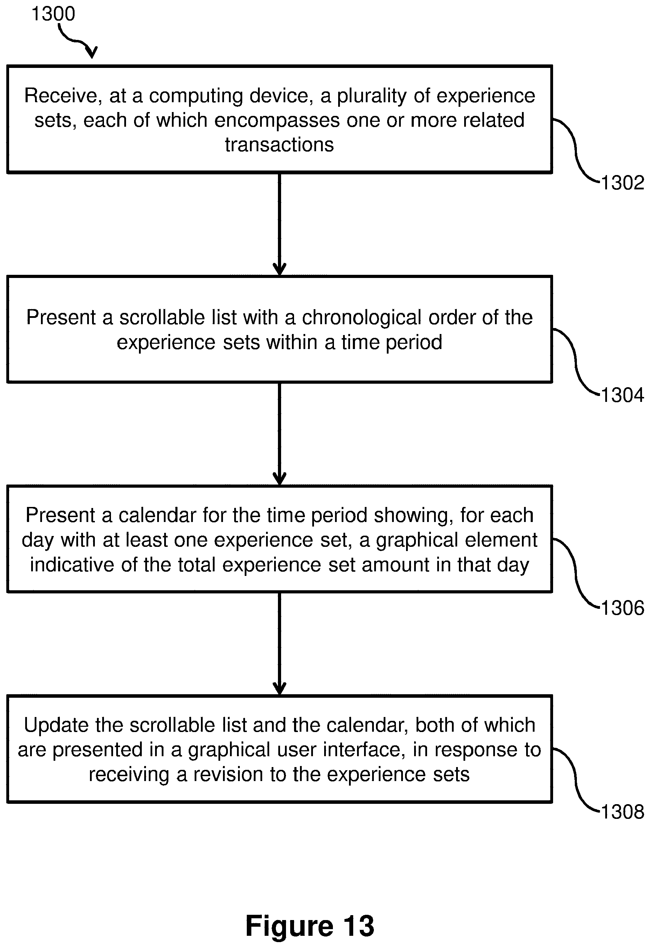

Figure 13 shows a method for improved visualization of transaction data from financial services computer network, according to some embodiments of the present disclosure. Method 1300 may be implemented within a user device, such as user device 230 shown in Figure 2. At block 1302, a computing device may receive one or more experience sets that have occurred within a time window, for example from a server, and at block 1304, present a scrollable list of the experience sets, for example as shown in Figure 8. The scrollable list may be reverse chronological, so that the newest experience set is above the others (e.g., experience set having experience set name 806 in Figure 8). It may also be forward chronological. In addition, as shown in block 1306, the computing device may present a calendar for the same time period, and in the calendar, it may show graphical elements that indicate the total amounts spent for the experience sets in their respective days (e.g., in Figure 8, calendar 802). In response to a change, such as the addition of one or more new experience sets or a change in the date window, the computing device may update the scrollable list and the calendar (block 1308). The shown method and its various implementations allow a user to visualize expense categories that are meaningful to a customer, rather than to a merchant. This is, in part, due to the grouping of transactions with precise authorization data (e.g., time, place) by the independent experience matchers into meaningful experience sets. As such, the methods enable a user to interactively visualize how a particular experience set fits into his/her overall spending pattern.

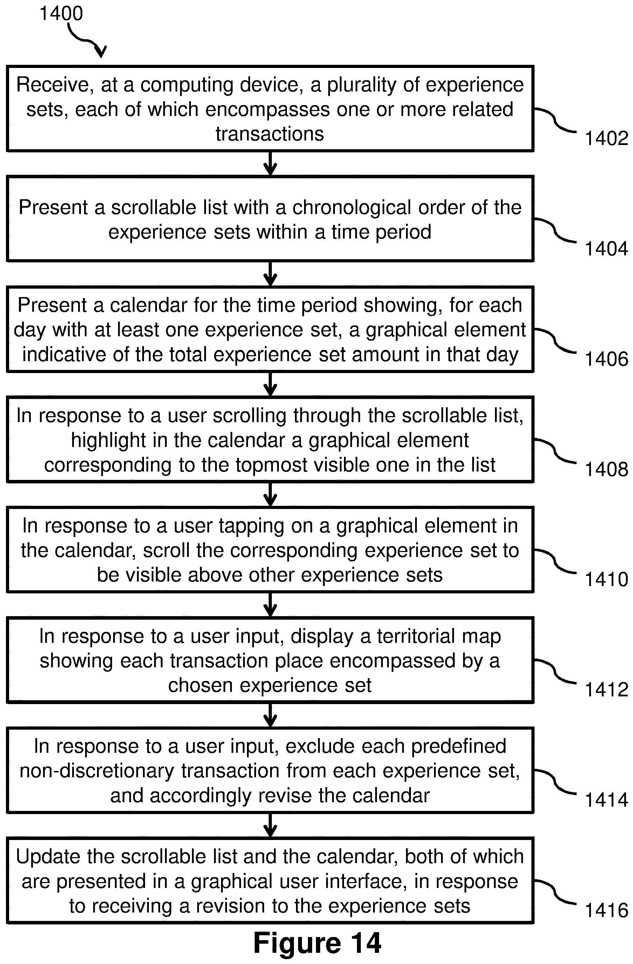

Figure 14 shows another method 1400 for improved visualization of transaction data, according to embodiments of the present disclosure. Method 1400 can be implemented in a user device. Once a user device receives one or more experience sets (block 1402), it may present them at block 1404 in a scrollable list, and at block 1406 in a calendar with graphical elements (such as graphical elements 606 shown in Figure 6). In response to a user scrolling through the scrollable list, the user device may highlight in the calendar a graphical element that corresponds to the day for the topmost date in the scrollable list (block 1408). Similarly, in response to a user choosing an element in the calendar (e.g., by tapping on it, by clicking on it, by hovering on it), the user device may scroll the corresponding date with experience sets to the top of the viewable area of the scrollable list (block 1410). Furthermore, in response to a user input, the user device may display a territorial map for the constituent transactions of a chosen experience set (block 1412). The user device may also exclude all non-discretionary (e.g., recurring) transactions from view in response to a user input (block 1414). Additionally, the user device may modify both the scrollable list and the calendar schematic in response to receiving a revision to the experience sets that requires a modification for correct display (block 1416).

A person skilled in the art will understand that the shape, sizes, and/or style of the graphical elements, such as graphical elements 606 shown in Figure 6, can be varied in order to convey information about experience sets and categories (e.g., type and amount information).

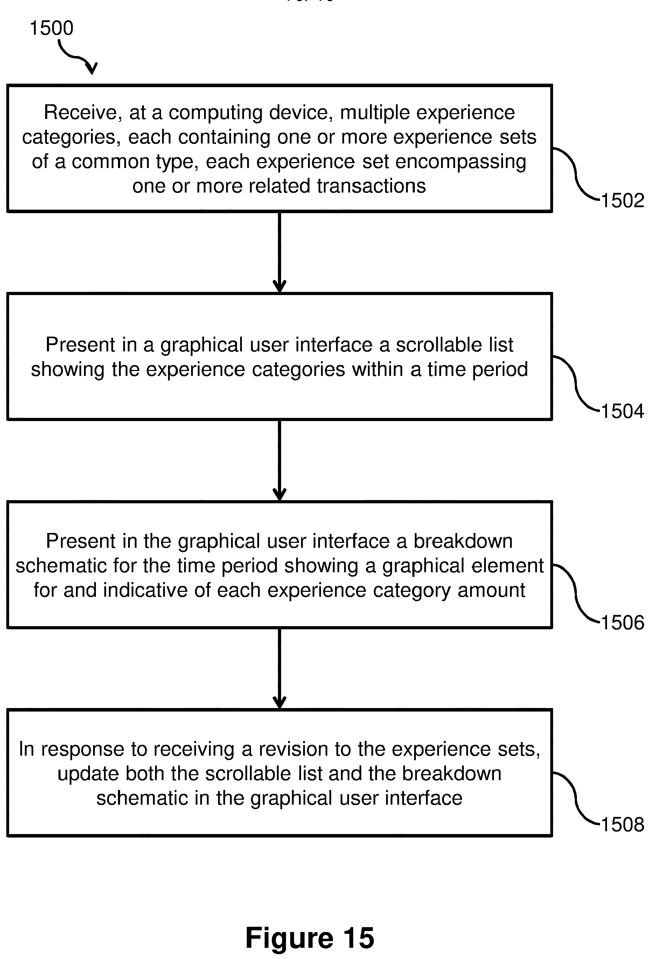

Figure 15 shows method 1500 for humanizing presentation of transaction data from a financial services computer network, according to some embodiments of the present disclosure. Method 1500 may be implemented in a user device, such as user device 310 shown in Figure 3. At block 1502, user device may receive multiple experience categories, each containing one or more experience sets. The user device may present in a GUI a scrollable list of the categories at block 1504, and may present a breakdown schematic with graphical symbols for each category at block 1506. Each of blocks 1504 and 1506 may be for a time period. At block 1508, the user device may update both the scrollable list and the breakdown schematic in response to a revision to the experience set categories. The shown method and its various implementations enable users to visualize their experience set types, which of such experience set types they spend the most on, and what particular transactions each experience set has in a given time frame. The processing of individual transactions by the multiple independent experience matchers, coordinated by the transaction hub, enables creation of experience sets, which further allows collections of experience set types, for example by the transaction hub or even by a user device, to be generated and displayed for providing insights to a user.

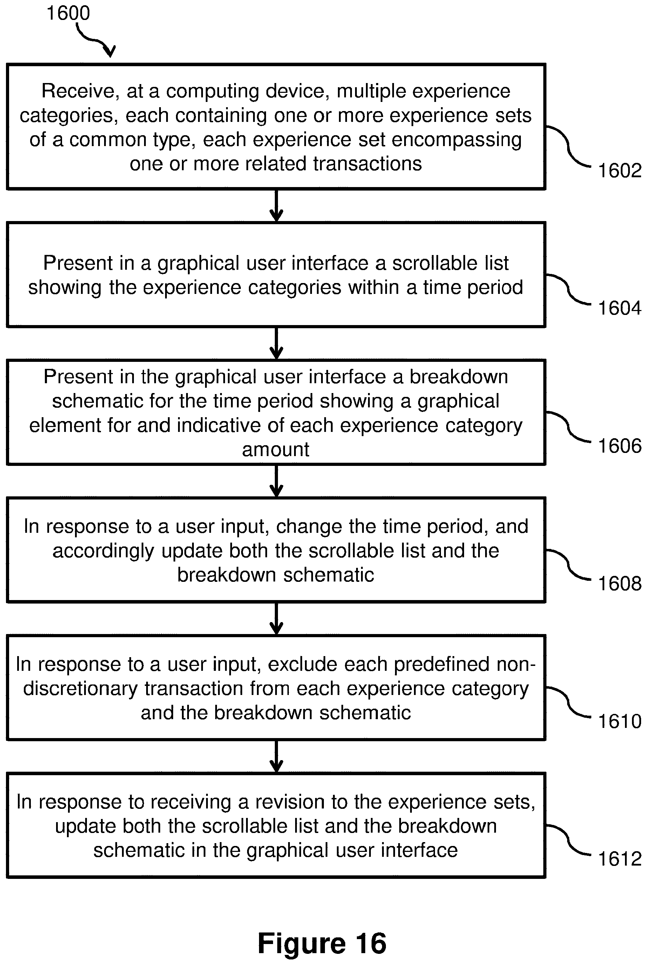

Figure 16 shows process 1600 for visualizing transaction data, according to some embodiments of the present disclosure. Method 1600 may be implemented in a user device, such as user device 310 shown in Figure 3. At block 1602, a user device may receive multiple experience categories, and at block 1604 the user device may present a GUI having a scrollable list of the categories. Additionally, the user device may present in the GUI a breakdown schematic with graphical elements that correspond to the categories (block 1606). Blocks 1604 and 1606 reference a time period, which is the time period during which the experience sets of the experience categories occur, and which may be a preset or selected time period. The time period may be changed by a user and, upon such a change, at block 1608, the scrollable list and the breakdown schematic may be updated. At block 1610, in response to user input, the user device may exclude the predefined non-discretionary (e.g., recurring) transaction for each experience category and the breakdown schematic. At block 1612, upon receiving other types of revisions, such as those to the experience sets or experience categories, the user device may modify the scrollable list and the breakdown schematic to reflect the revisions.

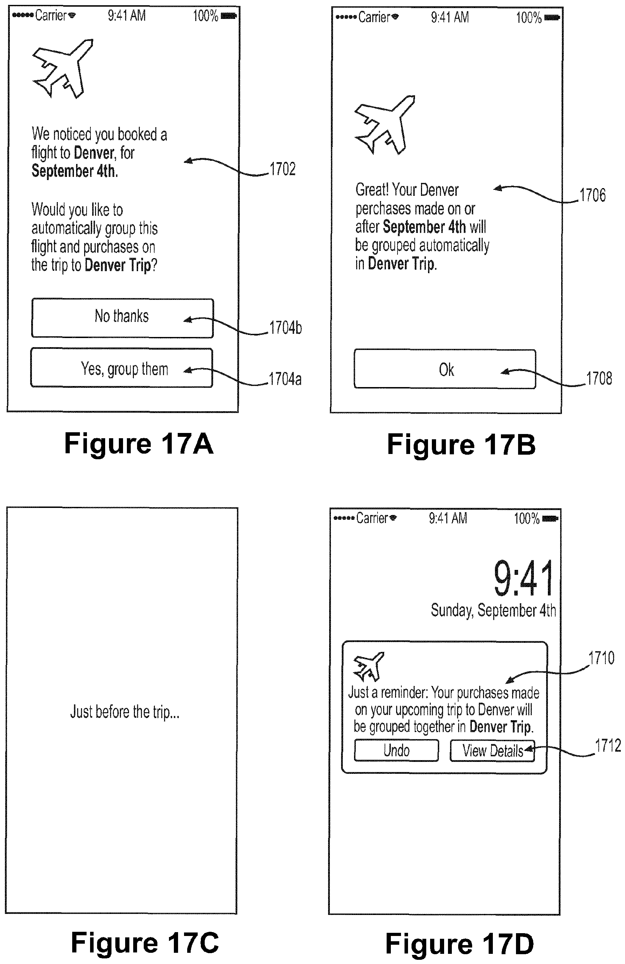

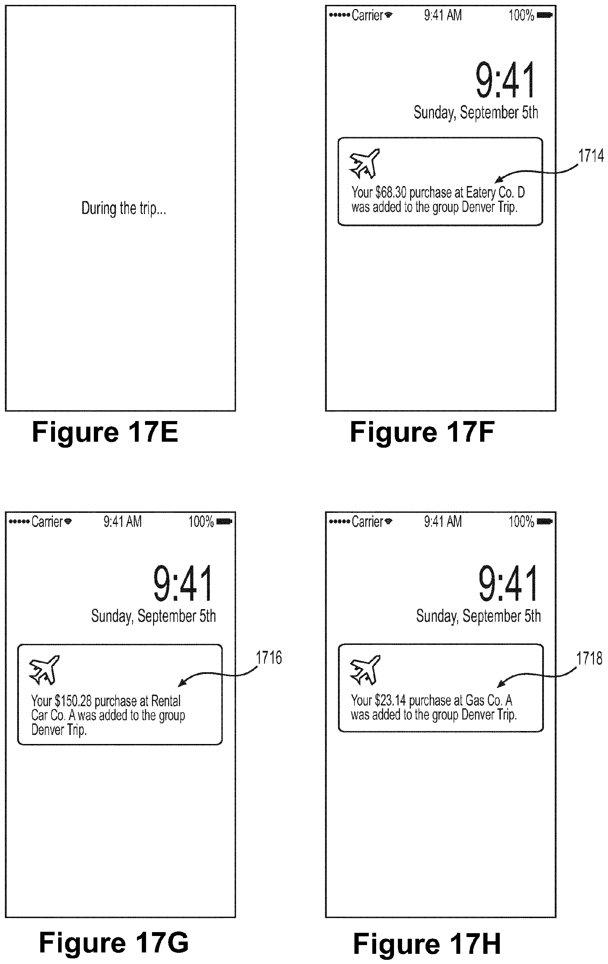

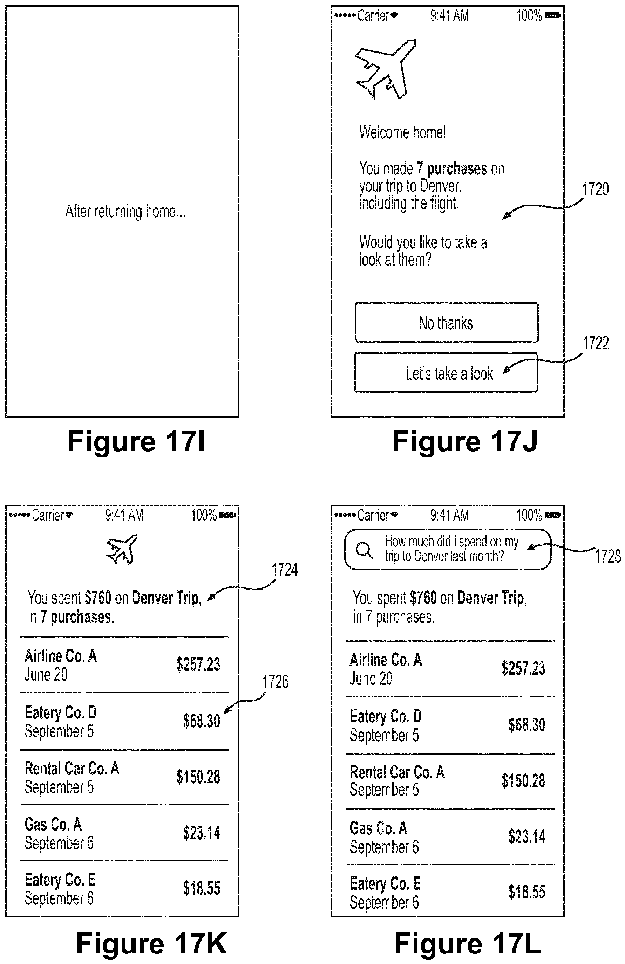

Referring to Figures 17A though 17N, an experience set may encompass transactions that are made over non-contiguous periods of time, meaning the constituent transactions of an experience set may be, in a chronological list of individual transactions, interspersed with other transactions that are not part of the same experience set. Figures 17A though 17N illustrate grouping non-contiguous transactions into experience sets, according to some embodiments of the present disclosure. The GUIs shown in these figures can be implemented in a user device, such as user device 230 of Figure 2.

Referring to Figures 17A and 17B, a GUI may be displayed to a user when the server, such as server 202 shown in Figure 2, detects that the user has made a transaction associated with an event that is to occur at a date later than the transaction (at "target date"), as further described in the rest of this disclosure. For example, a transaction corresponding to the purchase of a plane ticket on the first day of a month might be for a flight that is to occur on the nineteenth of the same month, in which case the event is the flight, and the target date is the nineteenth of the month. This type of transaction (such as the purchasing of a plane ticket in the above example) is referred to herein as a "trigger transaction." If the trigger transaction is a purchase, it may also be referred to herein as a "trigger purchase." The illustrative GUI can include query message 1702, a first control 1704a for a user to approve grouping the trigger transaction, and a second action control 1704b for a user to reject grouping the trigger transaction. In the shown example, the trigger purchase is a booking of a flight for a later date ("September 4^{th}"). Other types of trigger transactions may include purchasing or booking a cruise, a train ride, a bus ride, a rental car, an event space, a hotel room, a motel room, or a hostel space. User research or machine learning may lead to the discovery of more trigger transactions in the future, which may be added to the methods and systems disclosed herein. As shown in Figure 17B, when a user approves booking the trigger transaction with associated future transactions, explanatory message 1706 confirms that decision, and control 1708 allows the user to close the message.

Referring to Figures 17C and 17D, in some embodiments, the user device may display reminder message 1710, and allow a user to see further details by clicking on control 1712.

Referring to Figures 17E-17H, in some embodiments, during the trip, informational messages 1714, 1716, and 1718 may inform the user that certain purchases have been added to the experience set associated with the initial trigger purchase (e.g., flight booking in this case).

Referring to Figures 17I-17L, after the experience comes to an end, explanatory message 1720 may provide a brief summary of the experience and control 1722 may allow a user to view further details regarding the experience. The further details of the experience may include a name for the experience set, such as experience set name 1724 and constituent transactions such as transaction 1726, which is displayed with its date and amount in this example. The ending of an experience may be detected either in response to a user input, based on external data (e.g., through email scraping), through trigger purchase details (e.g., return flight booking), or through another subsequent transaction indicating that the experience is over (e.g., a local purchase made at home town away from the trip location). The summary of the experience, such as its experience set name and constituent transactions, may also be displayed in response to a typed or voiced language query by a user, such as by query 1728.

In some embodiments, if the longest interval between any two transactions in an experience set is less than a predetermined threshold (e.g., 6 hours, 1 day, 2 days, 1 week), then instead of relying on detection of a trigger transaction, any of the other methods described herein may also be used to group transactions (with other unrelated transactions interspersed between them) into experience sets.

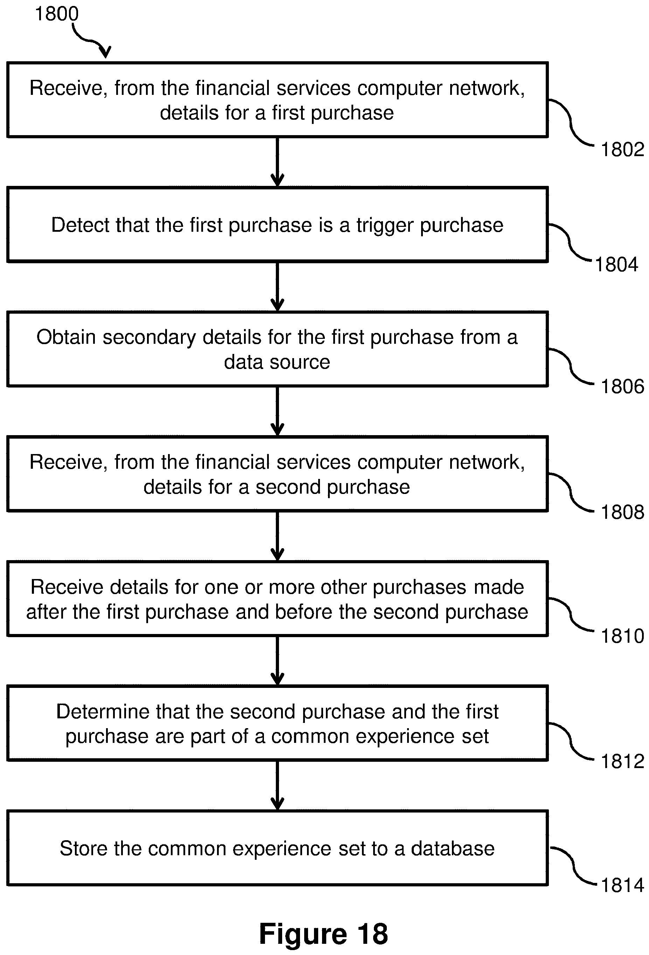

Figure 18 shows method 1800 for improved management of transaction data from a financial services computer network, according to some embodiments of the present disclosure. Method 1800 may be implemented within a server with a server architecture, such as server architecture 380 shown in Figure 3. At block 1802, a server may receive details for a first purchase, for example via importer 360 shown in Figure 3, and at block 1804, detect that it is a trigger purchase. The detection of a purchase as a trigger purchase may be done at an experience matcher, such as an experience matcher 340 shown in Figure 3 after transaction hub 330 sends the transaction to the experience matcher. For example, a non-contiguous experience matcher might be configured to match transactions with certain MCCs (e.g., those corresponding to or including purchasing or booking a cruise, a train ride, a bus ride, a rental car, an event space, a hotel room, a motel room, or a hostel space) or transactions with certain merchants (e.g., travel agents, hotels) and flag such transactions as trigger transactions for initiating an experience set that would, after an interval following the trigger transaction, continue with additional transactions. At block 1806, the server may obtain secondary details for the first purchase from a data source. The data source may be a third party supplier, such as a flight booking information supplier, or it may be an authorized email scraping application. The secondary details may include a target date on which an event with which the trigger transaction is associated is going to happen. For example, for a plane ticket purchase, the trigger transaction is the ticket purchase, the event is the flight, and the target date is the date of the flight. The secondary details may also include other details that are less directly associated with the trigger transaction, such as details that a user may have planned about what attractions the user will visit after the flight and when the user will take a return flight. After the first purchase, the server may receive details for one or more other unrelated purchases (block 1810) and details for a second purchase made subsequent to the one or more other unrelated purchases (block 1808). Using the details for the first purchase, secondary details for the first purchase, or both, the server may determine that the second purchase and the first purchase should be classified as part of a common experience set (block 1812), while the intervening other transactions are not part of the common experience set. For example, if a transaction received by the non-contiguous experience matcher has a date that is not within the expected event or experience date range (e.g., before the target date, after the expected completion date of the experience), then the non-contiguous experience matcher may exclude such a transaction from the non-contiguous experience set. On the other hand, if the second purchase has details that conform to the expected details for purchases that belong to the non-contiguous experience set, then the second purchase may be classified by the non-contiguous experience matcher as being part of the same experience set as the first purchase. The server may store the common experience set (e.g., including its attributes, such as its constituent transactions) to a database (block 1814). In some embodiments, additional purchases after the second purchase may also be added to the common experience set.

As one particular example of the processing shown in Figure 18, on a start date, an importer may receive a transaction corresponding to the purchasing of a plane ticket. This transaction may be sent by a transaction hub to one or more experience matchers, out of which, an experience matcher configured to detect trigger transactions would detect it as a trigger transaction, indicating that it is for an event that will occur on a future date. The experience matcher may perform the matching via comparing the transaction attributes, such as its MCC, its merchant name, its name, and/or its description to pre-determined trigger transaction attributes, which may be stored in a database. The trigger transaction attributes may be accessed by the experience matcher or by the transaction hub (e.g., transaction hub may send the trigger transaction attributes to the experience matchers). Once the detection of a transaction as a trigger transaction, the plane ticket in this case, is made, information for the associated experience set may be stored in a database by the transaction hub. The stored experience set, at that time, would contain the trigger transaction as a constituent transaction, and it would be open for inclusion of other transactions at a later time. The method may then include obtaining secondary details for the plane ticket purchase, for example from TSYS, which may provide information about original flight (e.g., date, airport) and return flight (e.g., date, airport). From these secondary details, the transaction hub may flag the experience set to be updated with additional transactions-pending the testing of these transactions though the experience matchers-during the expected date range. Once the target date is reached for the originating flight, the transaction hub may initiate sending the transactions that it receives from a financial services computer network to a collection of experience matchers that includes one or more experience matchers configured to detect transactions that belong to the non-contiguous experience set. In some embodiments, transaction hub may keep track of experience sets that are expected to accrue additional transactions, and coordinate sending a list of transactions to all experience matchers, or those specifically including/excluding experience matchers that detect trigger transactions or follow-on transactions, based on the secondary details such as date ranges expected for experience sets. In some embodiments, an experience matcher (e.g., one designed for detecting trigger transactions, one designed to detect follow-on transactions, or one designed to detect both trigger and follow-on transactions) may keep track of what experience sets may include non-contiguous transactions and which ones may accrue additional transactions.

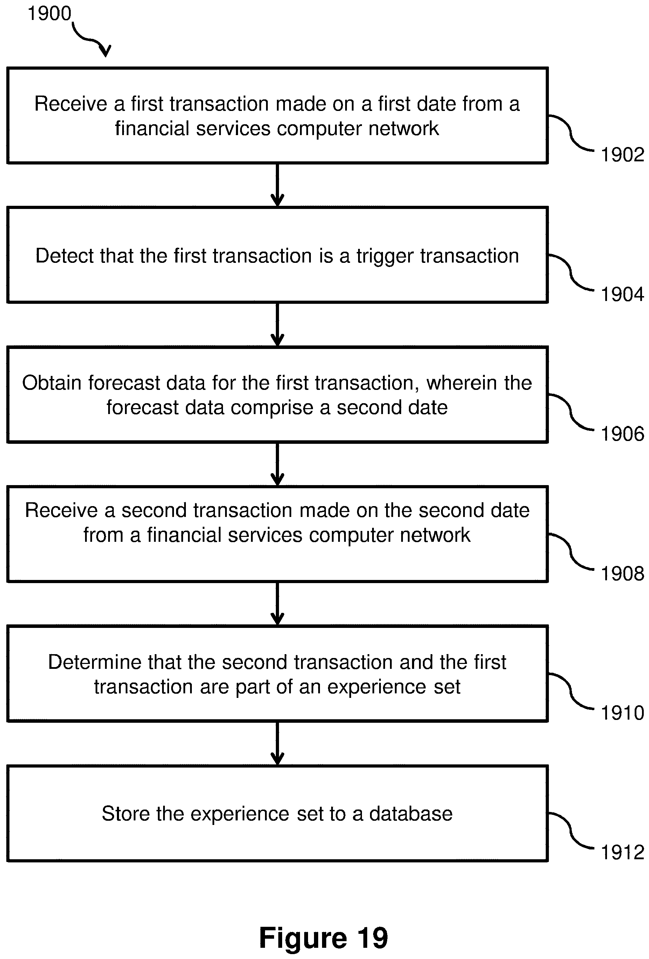

Figure 19 shows method 1900 for improving categorization of transactions by money-management software, according to some embodiments of the present disclosure. Method 1900 may be implemented within a server, such as server 202 shown in Figure 2. At block 1902, server may receive a first transaction from a financial services computer network, and after detecting that it is a trigger transaction (e.g., the first of a set of transactions that form a common experience set) at block 1904, it may obtain associated forecast data at block 1906. The forecast data may include a target date predicting when the second transaction of the experience set will occur. On the target date, at block 1908, the server may receive a second transaction and at block 1910, it may determine that the two transactions are part of a common experience set (e.g., by comparing their details and also by using the forecast data). At block 1912, the server may store the experience set to a database.

As one example of improving categorization of non-contiguously occurring transactions, the following may be implemented, for example with respect to processing that occurs in an experience matcher configured to detect both a trigger transaction and follow-on transactions that belong to the same experience set as the trigger transaction. In some embodiments, more than one experience matcher may be involved (e.g., one for detecting trigger transactions and one for detecting follow-on transactions). Once a transaction is received by the experience matcher, the experience matcher may check that the transaction has one of a certain set of MCCs, for example those that correspond to the purchasing of various tickets or remote accommodations. The experience matcher may also check that the merchant for the transaction is one of a certain set of merchants, such as ticket vendors or hotels. The list of MCCs and merchants may be stored in an accessible database or received from a transaction hub. Once a match is found, the transaction may be classified as a trigger transaction. Then, the experience matcher may receive secondary details for the trigger transaction from the transaction hub, which in turn may receive them from an external data source, such as an email scraping application authorized by the user. The secondary details may include a target date for the occurrence of the event associated with the trigger transaction, and may further include an end date for the conclusion of the user's plans that relate to the event. Thereafter, follow-on transactions may be received by the experience matcher. If those transactions have details that do not match the secondary details of the trigger transaction (e.g., being between the target date and the end date, being at or around the event location), then those transactions are classified as not being part of the same experience set as the trigger transaction. On the other hand, if some follow-on transactions have details that match the secondary details of the trigger transaction, then those follow-on transactions may be classified as being part of the same experience set as the trigger transaction. Multiple follow-on transactions may be added to the experience set until a terminating condition, such as reaching the end date, occurs.

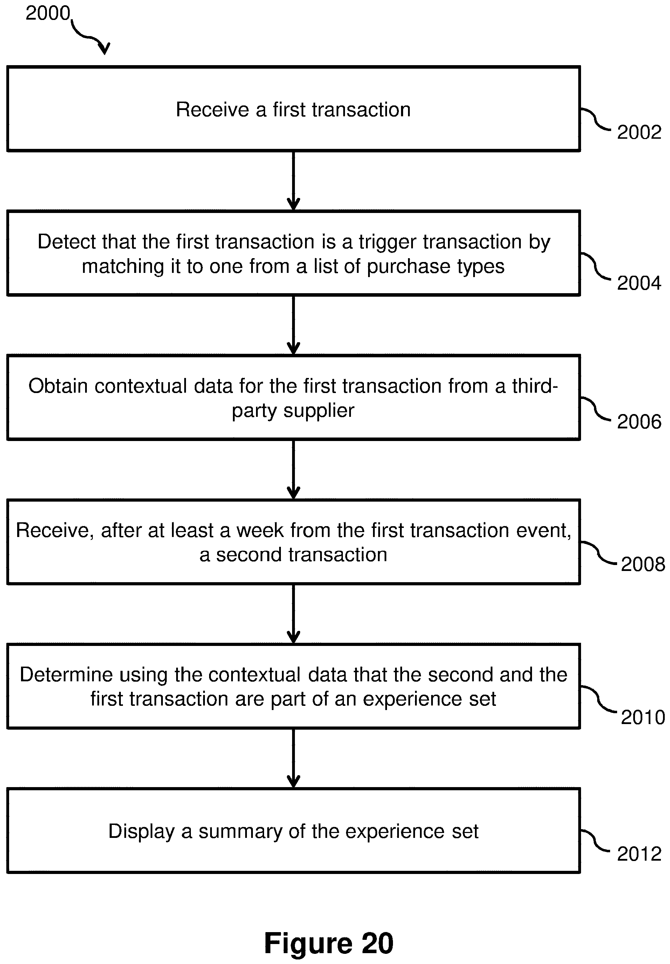

Figure 20 shows method 2000 for forming an experience set from a plurality of transactions, which can be implemented within a non-transitory computer readable medium (e.g., of a server), according to some embodiments of the present disclosure. Method 2000 may include receipt of a first transaction at block 2002, for example from a financial services computer network via an importer into a transaction hub, and then a detection that the transaction is a trigger transaction at block 2004, for example through processing done within an experience matcher. This detection may be made by matching the transaction type to a list of transaction types (e.g., plane tickets, hotel bookings), which types may be stored within a database accessible by one or more experience matchers or may be supplied to the experience matchers from the transaction hub, which itself may access the types from a database. At block 2006, contextual data may be obtained for the first transaction though a third-party supplier, such as a travel booking agent information provider, and at block 2008, a second transaction may be received. It may be determined at block 2010 that the two transactions are part of the same experience set, for example because an experience matcher has detected that the details for the second transaction (e.g., its date, location, MCC) match what has been expected based on the contextual data and the first transaction (e.g., the first transaction indicated an event on a second date, the contextual data indicated that the plans of the user include staying at a location after the second date until a third date for certain activities, and the second transaction has a date that is between the second date and the third date, occurs within the location, and has an MCCs that is within a predetermined list of MCCs that have been associated with the activities expected from the user). Then, the experience set summary may be displayed according to the executable instructions of the computer readable medium. As an example of contextual data, a third supplier may provide information regarding a flight purchase such as each leg of the flight, departure date, as well as origin and destination airports for each leg.

Methods described herein may represent processing that occurs within a system for managing transactions from a financial services computer network, such as system 200 shown in Figure 2. The subject matter described herein may be implemented in digital electronic circuitry, in computer software, in firmware, or in computer hardware, including the structural means disclosed in this specification and their structural equivalents. The subject matter described herein can be implemented as one or more computer program products, such as one or more computer programs tangibly embodied in an information carrier, such as a machine-readable storage device, for execution by or control of the operation of data processing apparatus, such as programmable processor or one or more computers. A computer program, software, application, or code can be written in any form of programming language (e.g., compiled, interpreted) and it can be deployed in any form (e.g., stand-alone program, module, component, subroutine, other unit suitable for use in computing environment). A computer program need not correspond to a file, can be stored in a portion of a file, can be stored in a single dedicated file, or can be stored across multiple files. A computer program can be deployed to be executed on one computer or on multiple computers at one site or can be distributed across multiple sites (e.g., as interconnected by a communication network).

The processes and logic flows described in this specification, including the method steps of the subject matter described herein, can be performed by one or more programmable processors executing one or more computer programs to perform functions of the subject matter described herein buy operating on input data and generating output. The processes and logic flows can also be performed by, and apparatus of the subject matter described herein can be implemented as, special purpose logic circuitry, such as a field programmable gate array or an application specific integrated circuit.

Processors suitable for the execution of a computer program include both general and special purpose microprocessors, as well as any one or more processors of any kind of digital computer. Generally, a processor will receive instructions and data from a read-only memory, a random-access memory, or both. The standard elements of a computer are a processor for executing instructions and one or more memory devices for storing instructions and data. Generally, a computer will also include, and/or be operatively coupled to receive data from or transfer data to, one or more mass storage devices for storing data, such as magnetic disks, magneto optical disks, or optical disks. Information carriers suitable for embodying computer program instructions and data include all forms of nonvolatile memory, including semiconductor memory devices such as EPROM, EEPROM, flash memory devices, and magnetic disks. The processor and the memory can be supplemented by or incorporated in special purpose logic circuitry.

Systems and methods described herein may provide a dynamic user interface for financial services and/or products. The dynamic user interface may provide unique analytical data in addition to and/or in place of basic account data. For example, systems and methods described herein may evaluate user financial data to generate metadata indicating analytical insights. Systems and methods described herein may aggregate and/or anonymize sensitive data regarding peer users (e.g., users having one or more financial, transactional, and/or behavioral traits in common) to generate analytical insights. To generate these insights, the systems and methods described herein may be configured to function in specific data environments involving sensitive and/or proprietary information and data structures. Systems and methods described herein may be configured to modify dynamic interfaces on a remote user device in a real-time and/or dynamic fashion. For example, systems and methods described herein may be configured to provide user-oriented tools for modifying the dynamic interfaces in a mobile environment with display space and configuration constraints.

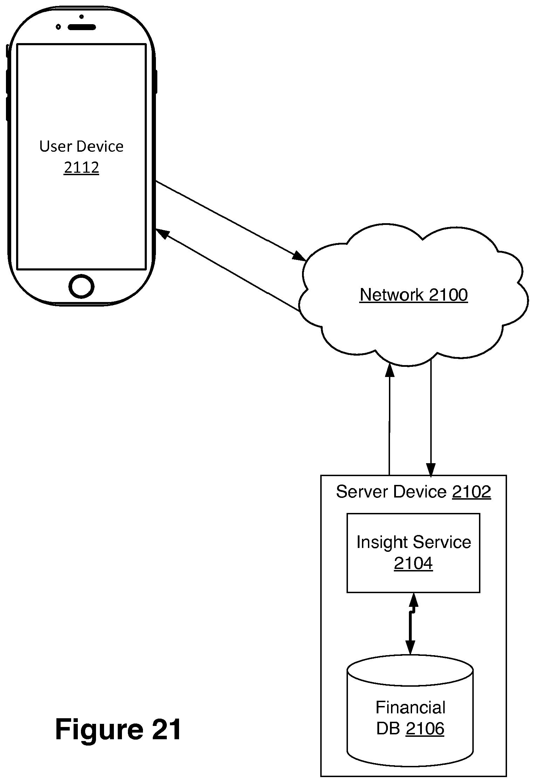

Turning now to Figure 21, there is shown a network 2100 providing dynamic interfaces according to an embodiment of the present disclosure. User device 2112 may present dynamic interfaces to a user and/or receive inputs from the user through the dynamic interfaces, as described herein. User device 2112 may be a smartphone, tablet, computer, or other device configured to facilitate user interaction with a user interface. User device 2112 may communicate with server device 2102 by network 2100 (e.g., the Internet or another public and/or private network). In some embodiments, user device 2112 may receive data used to generate and/or present dynamic interfaces from server device 2102 and/or may report data gathered from user interactions to server device 2102. While a single user device 2112 is shown in Figure 21, any number of user devices 2112 may communicate with server device 2102 by network 2100 and/or may present user interfaces as described herein.

Server device 2102 may be configured to analyze data, such as user account data, to generate insights that may be presented to the user. For example, server device 2102 may include insight service 2104, which may be configured to process user data and communicate with user device 2112, and financial database 2106, which may be configured to store data that is analyzed by insight service 2104. Server device 2102 is depicted as a single server including a single insight service 2104 and financial database 2106 for ease of illustration, but those of ordinary skill in the art will appreciate that server device 2102 may be embodied in different forms for different implementations. For example, server device 2102 may include a plurality of servers and/or a plurality of insight service 2104 and/or financial database 2106 instances.

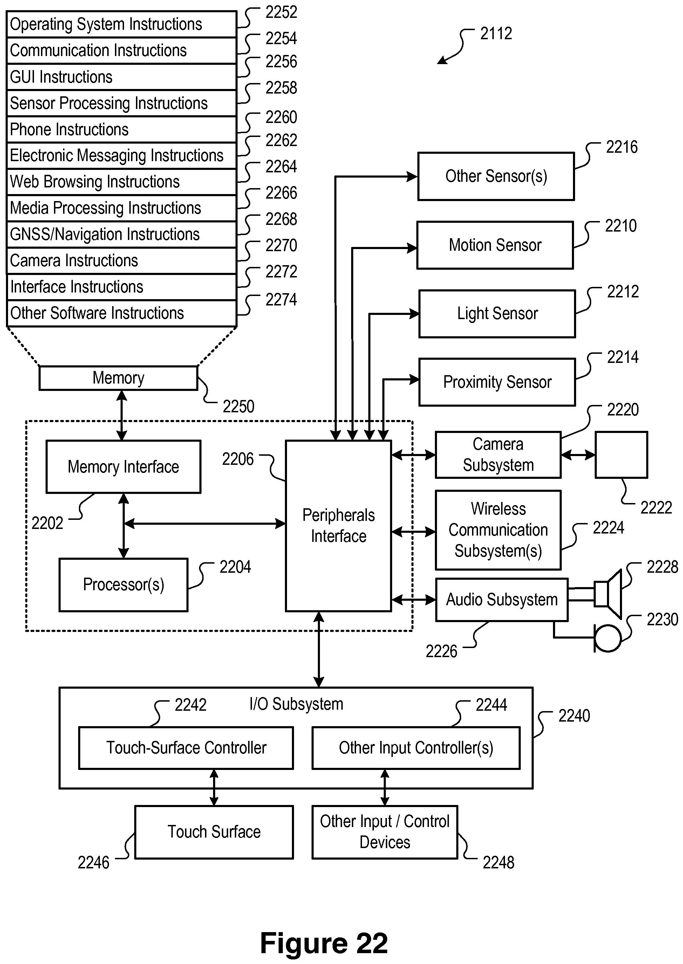

Figure 22 shows a block diagram of an example computing device, for example a computing device configured to function as user device 2112. For example, user device 2112 may interact with server device 2102 to present a dynamic interface to a user as described herein. The user device 2112 may include a memory interface 2202, one or more data processors, image processors, central processing units 2204, and a peripherals interface 2206. The memory interface 2202, the one or more processors 2204, and/or the peripherals interface 2206 may be separate components or may be integrated in one or more integrated circuits. The various components in the user device 2112 may be coupled by one or more communication buses or signal lines.

Sensors, devices, and subsystems may be coupled to the peripherals interface 2206 to facilitate multiple functionalities. For example, a motion sensor 2210, a light sensor 2212, and a proximity sensor 2214 may be coupled to the peripherals interface 2206 to facilitate orientation, lighting, and proximity functions. Other sensors 2216 may also be connected to the peripherals interface 2206, such as a global navigation satellite system (GNSS) (e.g., GPS receiver), a temperature sensor, a biometric sensor, magnetometer, or other sensing device, to facilitate related functionalities.

A camera subsystem 2220 and an optical sensor 2222, e.g., a charged coupled device (CCD) or a complementary metal-oxide semiconductor (CMOS) optical sensor, may be utilized to facilitate camera functions, such as recording photographs and video clips. The camera subsystem 2220 and the optical sensor 2222 may be used to collect images of a user to be used during authentication of a user, e.g., by performing facial recognition analysis.

Communication functions may be facilitated through one or more wired and/or wireless communication subsystems 2224, which can include radio frequency receivers and transmitters and/or optical (e.g., infrared) receivers and transmitters. For example, the Bluetooth (e.g., Bluetooth low energy (BTLE)) and/or WiFi communications described herein may be handled by wireless communication subsystems 2224. The specific design and implementation of the communication subsystems 2224 may depend on the communication network(s) over which the user device 2112 is intended to operate. For example, the user device 2112 may include communication subsystems 2224 designed to operate over a GSM network, a GPRS network, an EDGE network, a WiFi or WiMax network, and a Bluetooth™ network. For example, the wireless communication subsystems 2224 may include hosting protocols such that the device 2112 can be configured as a base station for other wireless devices and/or to provide a WiFi service.

An audio subsystem 2226 may be coupled to a speaker 2228 and a microphone 2230 to facilitate voice-enabled functions, such as speaker recognition, voice replication, digital recording, and telephony functions. The audio subsystem 2226 may be configured to facilitate processing voice commands, voice printing, and voice authentication, for example.

The I/O subsystem 2240 may include a touch-surface controller 2242 and/or other input controller(s) 2244. The touch-surface controller 2242 may be coupled to a touch surface 2246. The touch surface 2246 and touch-surface controller 2242 may, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with the touch surface 2246.

The other input controller(s) 2244 may be coupled to other input/control devices 2248, such as one or more buttons, rocker switches, thumb-wheel, infrared port, USB port, and/or a pointer device such as a stylus. The one or more buttons (not shown) may include an up/down button for volume control of the speaker 2228 and/or the microphone 2230.

In some implementations, a pressing of the button for a first duration may disengage a lock of the touch surface 2246; and a pressing of the button for a second duration that is longer than the first duration may turn power to the user device 2112 on or off. Pressing the button for a third duration may activate a voice control, or voice command, module that enables the user to speak commands into the microphone 2230 to cause the device to execute the spoken command. The user may customize a functionality of one or more of the buttons. The touch surface 2246 can, for example, also be used to implement virtual or soft buttons and/or a keyboard.

In some implementations, the user device 2112 may present recorded audio and/or video files, such as MP3, AAC, and MPEG files. In some implementations, the user device 2112 may include the functionality of an MP3 player, such as an iPod™. The user device 2112 may, therefore, include a 36-pin connector and/or 8-pin connector that is compatible with the iPod. Other input/output and control devices may also be used.

The memory interface 2202 may be coupled to memory 2250. The memory 2250 may include high-speed random access memory and/or non-volatile memory, such as one or more magnetic disk storage devices, one or more optical storage devices, and/or flash memory (e.g., NAND, NOR). The memory 2250 may store an operating system 2252, such as Darwin, RTXC, LINUX, UNIX, OS X, WINDOWS, or an embedded operating system such as VxWorks.

The operating system 2252 may include instructions for handling basic system services and for performing hardware dependent tasks. In some implementations, the operating system 2252 may be a kernel (e.g., UNIX kernel). In some implementations, the operating system 2252 may include instructions for performing voice authentication.

The memory 2250 may also store communication instructions 2254 to facilitate communicating with one or more additional devices, one or more computers and/or one or more servers. The memory 2250 may include graphical user interface instructions 2256 to facilitate graphic user interface processing; sensor processing instructions 2258 to facilitate sensor-related processing and functions; phone instructions 2260 to facilitate phone-related processes and functions; electronic messaging instructions 2262 to facilitate electronic-messaging related processes and functions; web browsing instructions 2264 to facilitate web browsing-related processes and functions; media processing instructions 2266 to facilitate media processing-related processes and functions; GNSS/Navigation instructions 2268 to facilitate GNSS and navigation-related processes and instructions; and/or camera instructions 2270 to facilitate camera-related processes and functions.

The memory 2250 may store dynamic interface instructions 2272 to facilitate other processes and functions, such as communicating with server device 2102 to receive dynamic interface information, displaying dynamic interface information, and/or processing user interactions with the dynamic interface as described herein.

The memory 2250 may also store other software instructions 2274, such as web video instructions to facilitate web video-related processes and functions; and/or web shopping instructions to facilitate web shopping-related processes and functions. In some implementations, the media processing instructions 2266 may be divided into audio processing instructions and video processing instructions to facilitate audio processing-related processes and functions and video processing-related processes and functions, respectively.

Each of the above identified instructions and applications may correspond to a set of instructions for performing one or more functions described herein. These instructions need not be implemented as separate software programs, procedures, or modules. The memory 2250 may include additional instructions or fewer instructions. Furthermore, various functions of the user device 2112 may be implemented in hardware and/or in software, including in one or more signal processing and/or application specific integrated circuits.

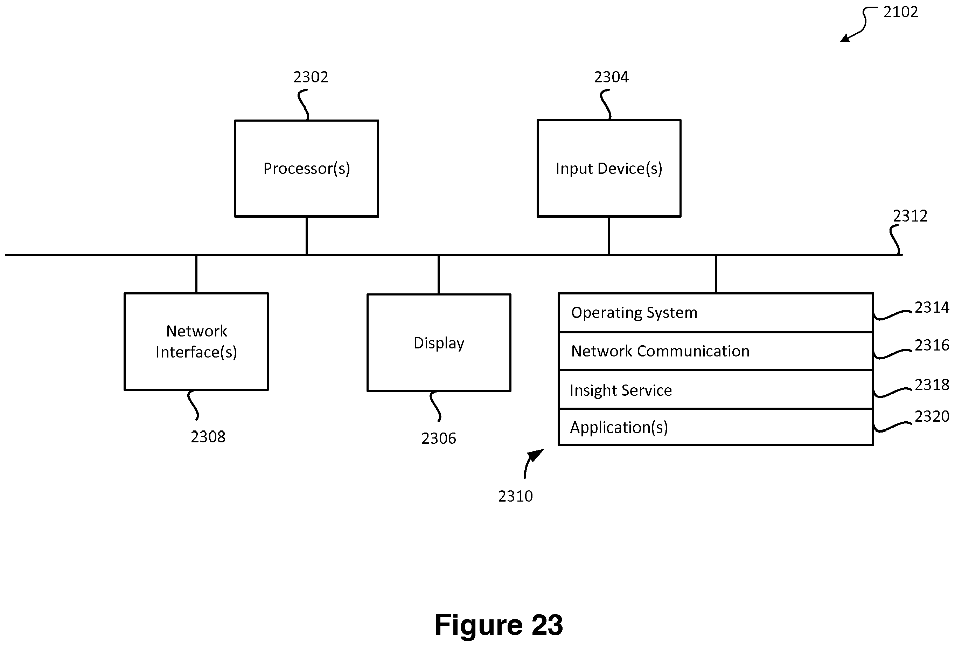

Figure 23 is a block diagram of an example server device 2102 that may implement various features and processes as described herein. The server device 2102 may be implemented on any electronic device that runs software applications derived from compiled instructions, including without limitation personal computers, servers, smart phones, media players, electronic tablets, game consoles, email devices, etc. In some implementations, the server device 2102 may include one or more processors 2302, one or more input devices 2304, one or more display devices 2306, one or more network interfaces 2308, and one or more computer-readable mediums 2310. Each of these components may be coupled by bus 2312.

Display device 2306 may be any known display technology, including but not limited to display devices using Liquid Crystal Display (LCD) or Light Emitting Diode (LED) technology. Processor(s) 2302 may use any known processor technology, including but not limited to graphics processors and multi-core processors. Input device 2304 may be any known input device technology, including but not limited to a keyboard (including a virtual keyboard), mouse, track ball, and touch-sensitive pad or display. Bus 2312 may be any known internal or external bus technology, including but not limited to ISA, EISA, PCI, PCI Express, NuBus, USB, Serial ATA or FireWire. Computer-readable medium 2310 may be any medium that participates in providing instructions to processor(s) 2302 for execution, including without limitation, non-volatile storage media (e.g., optical disks, magnetic disks, flash drives, etc.), or volatile media (e.g., SDRAM, ROM, etc.).

Computer-readable medium 2310 may include various instructions 2314 for implementing an operating system (e.g., Mac OS®, Windows®, Linux). The operating system may be multi-user, multiprocessing, multitasking, multithreading, real-time, and the like. The operating system may perform basic tasks, including but not limited to: recognizing input from input device 2304; sending output to display device 2306; keeping track of files and directories on computer-readable medium 2310; controlling peripheral devices (e.g., disk drives, printers, etc.) which can be controlled directly or through an I/O controller; and managing traffic on bus 2312. Network communications instructions 2316 may establish and maintain network connections (e.g., software for implementing communication protocols, such as TCP/IP, HTTP, Ethernet, telephony, etc.).

Insight service instructions 2318 can include instructions that perform data analysis and transformation and generate dynamic interface information as described herein. For example, insight service instructions 2318 may evaluate user transaction data to generate additional metadata facilitating dynamic interface presentation (e.g., associating disparate transactions into unified events and/or categories), aggregate and/or anonymize sensitive data regarding peer users to facilitate some dynamic interface element presentations, modify and/or inject dynamic interface element scripts into an interface being displayed by user device 2112, and/or perform other processing as described herein.

Application(s) 2320 may be an application that uses or implements the processes described herein and/or other processes. The processes may also be implemented in operating system 2314.

The described features may be implemented in one or more computer programs that may be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program may be written in any form of programming language (e.g., Objective-C, Java), including compiled or interpreted languages, and it may be deployed in any form, including as a stand-alone program or as a module, component, subroutine, or other unit suitable for use in a computing environment.

Suitable processors for the execution of a program of instructions may include, by way of example, both general and special purpose microprocessors, and the sole processor or one of multiple processors or cores, of any kind of computer. Generally, a processor may receive instructions and data from a read-only memory or a random access memory or both. The essential elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an API. An API may define one or more parameters that are passed between a calling application and other software code (e.g., an operating system, library routine, function) that provides a service, that provides data, or that performs an operation or a computation.

The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API.

In some implementations, an API call may report to an application the capabilities of a device running the application, such as input capability, output capability, processing capability, power capability, communications capability, etc.

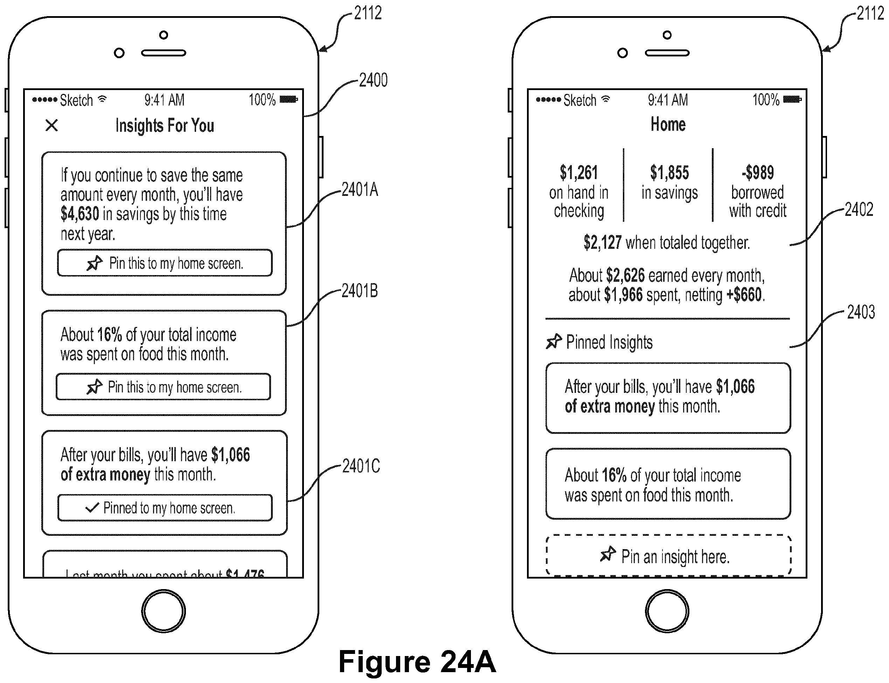

Figures 24A-24L show a dynamic interface according to an embodiment of the present disclosure. In the illustrated examples, a user may access an application or a web interface with user device 2112 (e.g., the user may log into a user account and access a dynamic interface that may be tailored to the specific user of the account). The illustrated dynamic interface includes several example presentation types that deliver several example pieces of data to the user of user device 2112. The examples provided in Figures 24A-24L are not intended to be exhaustive. The dynamic interface described herein may be configured to present different data in different formats with similar underlying processing to the examples illustrated in Figures 24A-24L. The dynamic interface provides various features and functionalities enabling customization of interface arrangement and/or data presented through the interface without requiring the use of settings menus and the like. Accordingly, as described below, the dynamic interface may improve customization and/or personalization of mobile or other space-constrained user interfaces.

Figure 24A shows a pinnable insights portion of the dynamic interface. As described in detail below, insight service 2104 may analyze user data and/or data related to other users and generate insights tailored to the user based on the analyzing. Insight service 2104 may send data describing the insights to user device 2112. User device 2112 may present the data to the user in an insight feed 2400 including one or more insight cards 2401. Insight cards may be user interface elements configured to fit modularly into varied interfaces and/or contexts. For example, Figure 24A illustrates insight feed 2400 including three insight cards 2401A, 2401B, 2401C. Each insight card 2401A, 2401B, 2401C may show a separate insight. Each insight card 2401A, 2401B, 2401C may include an option to pin the insight to a home screen of the dynamic interface (e.g., where pinning may cause the insight to persist on the home screen and be updated dynamically as new data is generated over time).

Figure 24A also shows home screen 2402 of the dynamic interface. The user may be able to switch between insight feed 2400 and home screen 2402 using a menu interface, links, or other interface features, for example (not shown). Home screen 2402 may include basic information about the user's accounts (e.g., values associated with a checking account, savings account, and credit card account). Home screen 2402 may also include one or more basic insights (e.g., total value of the accounts and value incoming and outgoing each month). In addition, home screen 2402 may include pinned insights 2403, which may be insights pinned to home screen 2402 from insight cards 2401. For example, insight cards 2401 may be pinned to home screen 2402 through a user selection within insight card 2401 itself. Accordingly, the user may be able to customize home screen 2402 appearance by interacting with insight card 2401, rather than changing settings in a home screen menu or the like.

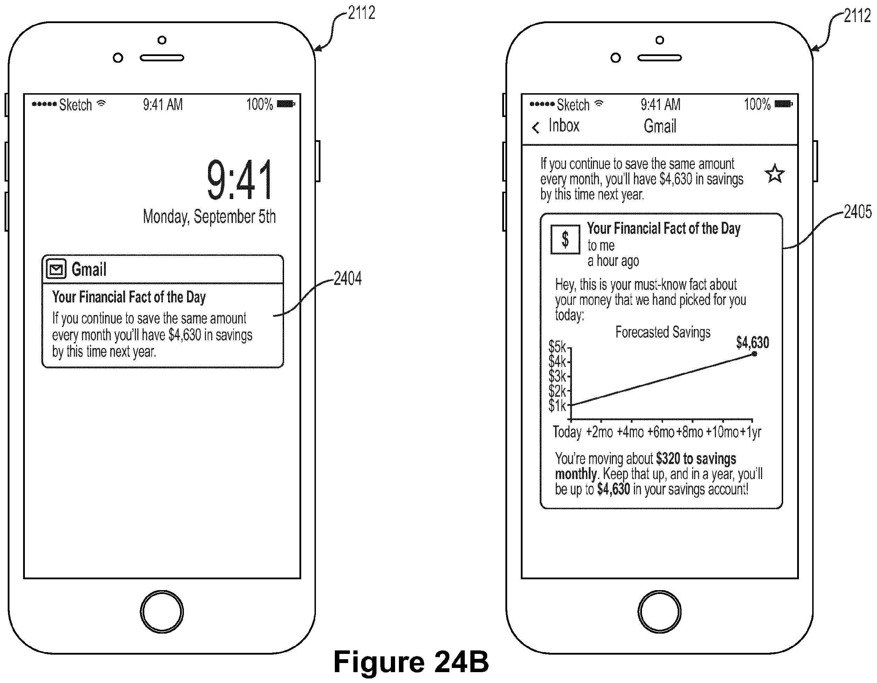

Figure 24B shows a fact of the day screen 2405 of the dynamic interface. User device 2112 may display a notification 2404 on a lock screen or other screen, for example a screen unrelated to dynamic interface instructions 272. Notification 2404 may include some details about a fact of the day. By clicking on notification 2404, the user may navigate to fact of the day screen 2405, which may display further details about the fact of the day. In some embodiments, user device 2112 may deliver the fact of the day in other ways, such as by email, text message, or other delivery techniques.

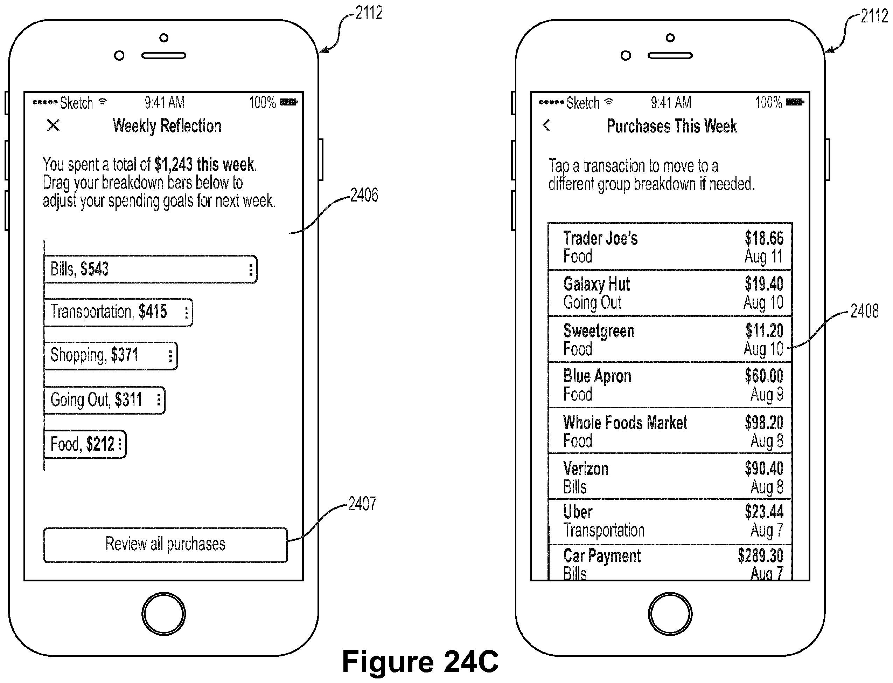

Figure 24C shows a weekly reflection screen 2406 of the dynamic interface. Weekly reflection screen 2406 may illustrate a breakdown of how the user spent money during a week. For example, the breakdown of Figure 24C includes a plurality of bars showing weekly spend for a plurality of expense categories. In some embodiments, a user may be able to adjust the bars (e.g., to add money or subtract money) to set spending goals for a following week (e.g., spend less on transportation by making the transportation bar smaller or spend more on food by making the food bar bigger). Weekly reflection screen 2406 may include an option to review specific purchases 2407. Selecting this option may cause user device 2112 to display a list of transactions 2408. The transactions may indicate information such as a location, amount spent, date, and/or type of transaction. A user may be able to edit the type of transaction (e.g., Galaxy Hut is listed under "going out" because it is a bar, but the user may have visited Galaxy Hut to eat dinner and may move the Galaxy Hut entry into the "food" category). Accordingly, the user may be able to modify how transactions are classified through interaction with specific purchases 2407, for example.

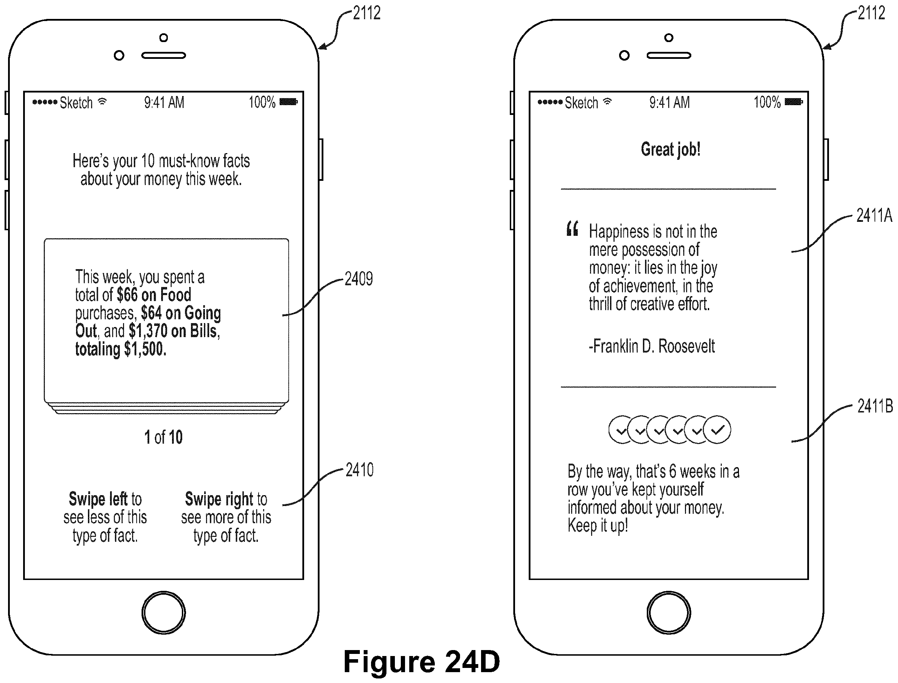

Figure 24D shows a weekly card stack screen 2409 of the dynamic interface. Weekly card stack screen 2409 may include a plurality of cards indicating facts that may change on a weekly basis. For example, the facts may relate to the user's weekly spending, may be facts about the user's finances over a different period of time, and/or may be facts of general interest. Weekly card stack screen 2409 may include swipe feature 2410 allowing the user to cycle through the cards to see various facts and, at the same time, indicate whether they would like to see more information like that presented in the cards. For example, a user may be able to swipe right on a card to indicate that they are interested in the information, swipe left to indicate they are not interested, or vice versa. After the swipe, weekly card stack screen 2409 may present a different swipeable card. Swiping through the available cards until all cards have been displayed may cause user device 2112 to show additional details 2411, which may include reward information 2411A (e.g., a an inspirational quote as a reward for viewing all the cards) and/or specific encouragement 2411B (e.g., an indication of how often the user swiped to evaluate cards in a recent period). By indicating which information is relevant in this way, the user may be able to affect future card presentations. For example, user device 2112 may store data indicating which cards in the stack were indicated as interesting and which were not, so that future presentations of weekly card stack screen 2409 may include cards more similar to the former. Accordingly, the user may be able to customize weekly card stack screen 2409 without explicitly providing interests in a settings menu or the like.

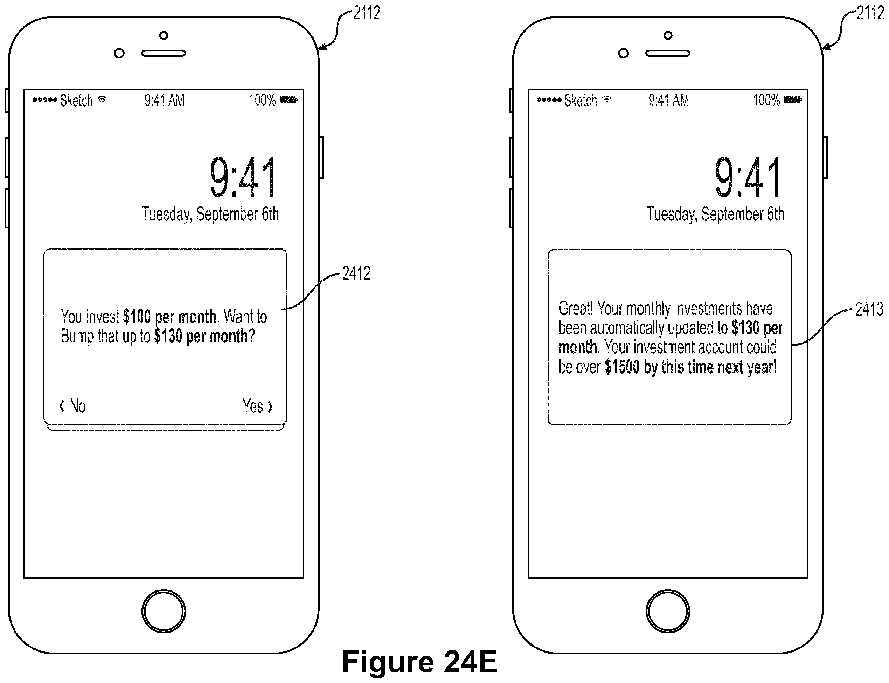

Figure 24E shows a choose your own future screen 2412 of the dynamic interface. Choose your own future screen 2412 may present one or more cards suggesting one or more options for changing settings associated with one or more financial accounts. The options may be generated through analysis of the user's financial information in some embodiments. For example, as shown in Figure 24E, a card may suggest increasing an amount of money placed in an investment account each month. This may be presented because the user consistently has enough money in a checking account each month to invest more, for example. The user may interact with the card (e.g., to accept or refuse the offer) and, in response, user device 2112 may present an indication of the user's selection 2413. In the illustrated example, the user has chosen to increase the investment amount. Indication 2413 may be displayed after the user's automatic withdrawal settings have been reset in response to the user's selection. Accordingly, the user may be able to customize account settings through interaction with cards on the choose your own future screen 2412, as opposed to manually changing recurring account actions, for example.

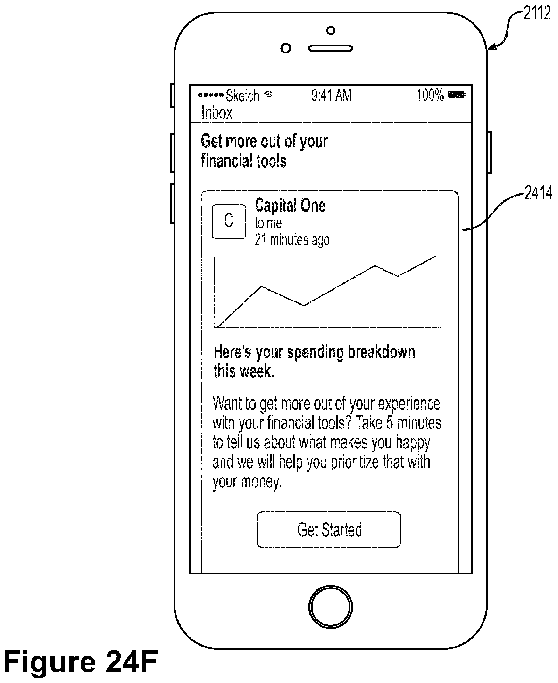

Figure 24F shows a newsletter screen 2414 of the dynamic interface. Newsletter screen 2414 may be delivered by email, for example. Newsletter screen 2414 may include some information about the user's financial situation and/or may include a link to other interfaces described herein, such as home screen 2402.

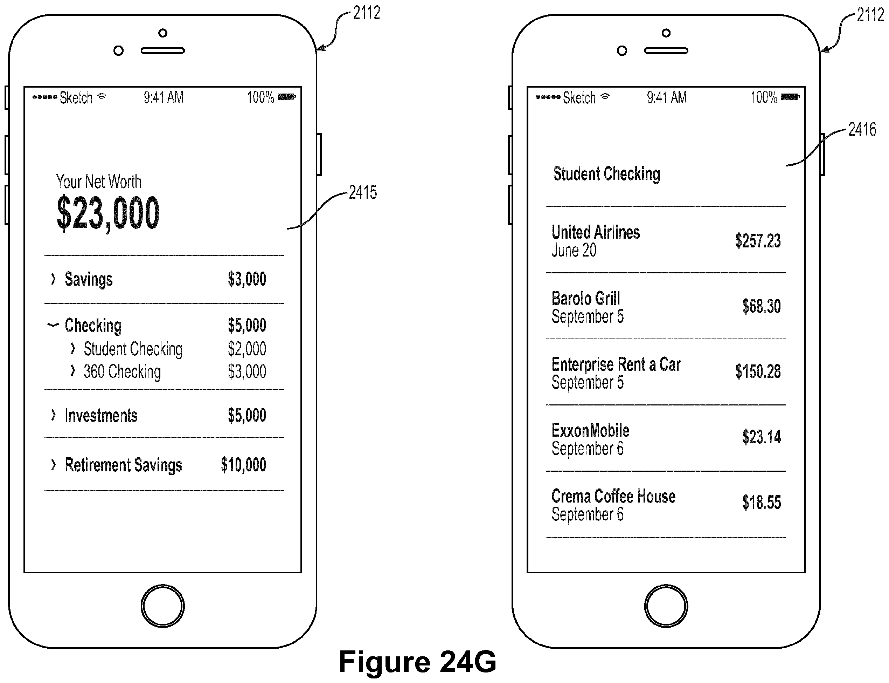

Figure 24G shows a net worth breakdown screen 2415 of the dynamic interface. Net worth breakdown screen 2415 may show a user's total net worth and may break the value down by category (e.g., savings, checking, investments, and retirement savings in the example of FIG. 24G). A user may be able to select a category and see further breakdowns (e.g., multiple checking accounts as shown in Figure 24G). In some embodiments, the user may be able to select a category and cause user device 2112 to show an individual category breakdown screen 2416 (e.g., a single account with specific transactions as shown in Figure 24G).

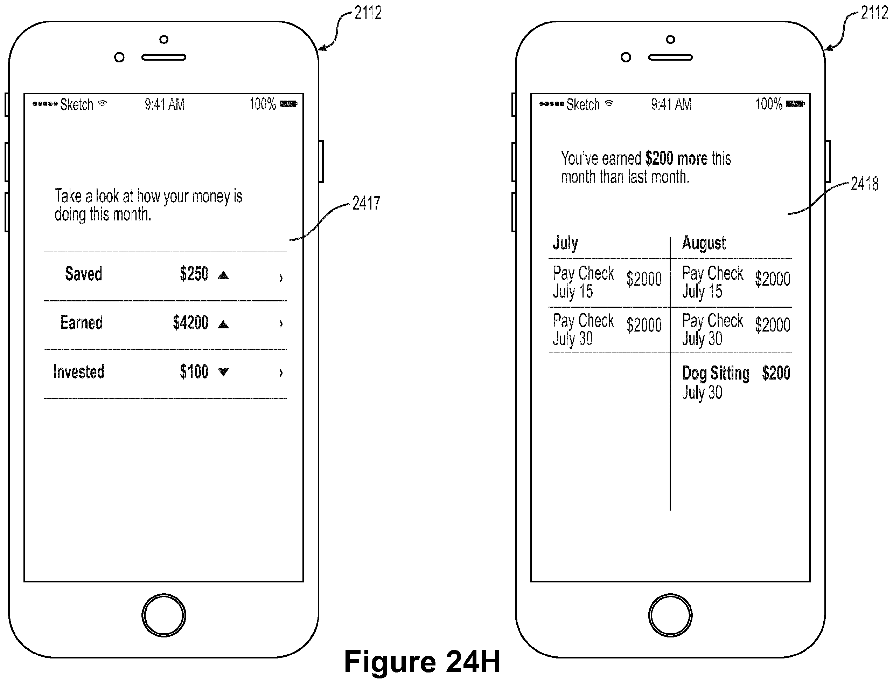

Figure 24H shows a pattern change screen 2417 of the dynamic interface. For example, pattern change screen 2417 may show how a user's financial patterns have changed from one month over the previous month (or other time period). The example of Figure 24H shows savings increasing, earnings increasing, and investments decreasing month-to-month. A user may be able to select one of the categories, which may cause user device 2112 to present a category details screen 2418. Category details screen 2418 may show specific breakdowns of why the category changed from one month to the next.

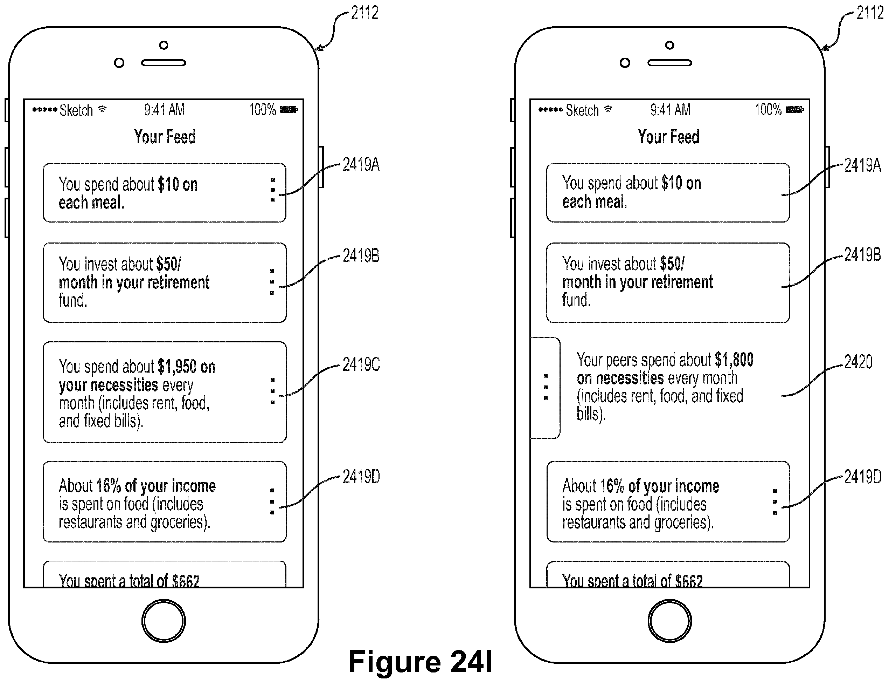

Figure 24I shows a feed with comparisons screen 2419 of the dynamic interface. User device 2112 may present one or more cards 2419A-2419D with insights about a user's finances. The cards 2419A-2419D may be swipeable or otherwise selectable so that when selected, a card 2419C may change to show insights about peer users 2420. For example, the insights about peers may be an average value of a same insight data point for a group of other users similar to the user in some way (e.g., age, income, location, etc.). Insight service 2104 may have access to data about many users and may analyze the data to identify peers and generate insights about the peers as a group without identifying specific peers. In some embodiments, insight service 2104 may provide information about how the peers are determined and/or may allow a user to adjust the definition of peer. For example, user device 2112 may provide an interface showing how peers are defined (e.g., same zip code and same income bracket) and allowing the user to change the definition (e.g., change to same zip code and similar set of merchants frequented). Insight service 2104 may update the peer definition, and future comparisons may reflect the changes.

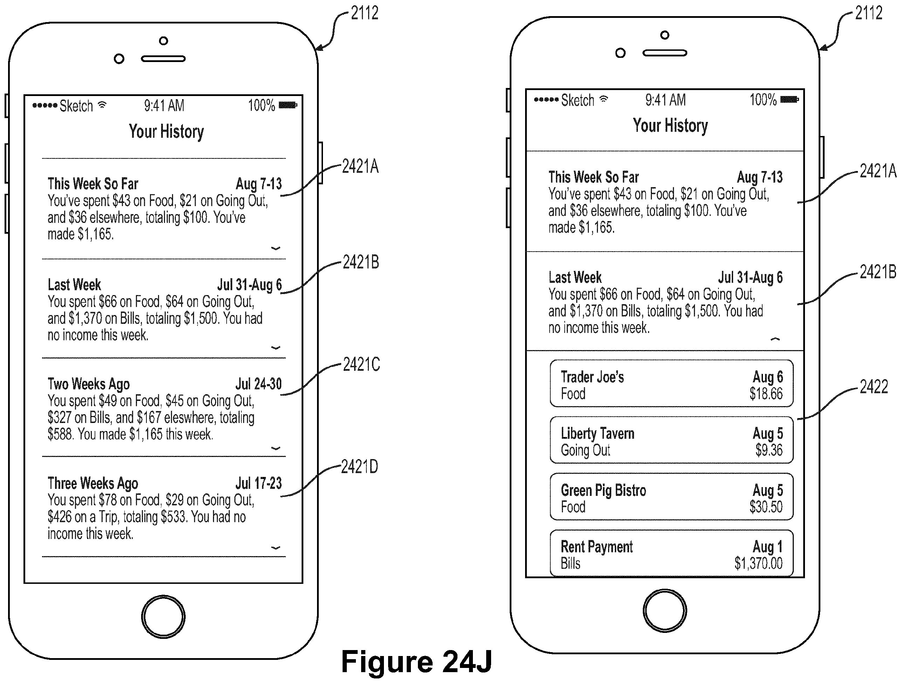

Figure 24J shows a feed with summaries screen 2421 of the dynamic interface. User device 2112 may present one or more insights 2421A-2421D about a user's finances. For example, the insights 2421A-2421D may include insights for different historical periods, such as a current week and previous weeks as in the example of Figure 24J. The user may be able to swipe, click, or otherwise select insight 2421C, and user device 2112 may show details about the selected insight 2422. For example, selecting a particular week may bring up a list of financial transactions incurred during the selected week, as shown in Figure 24J.

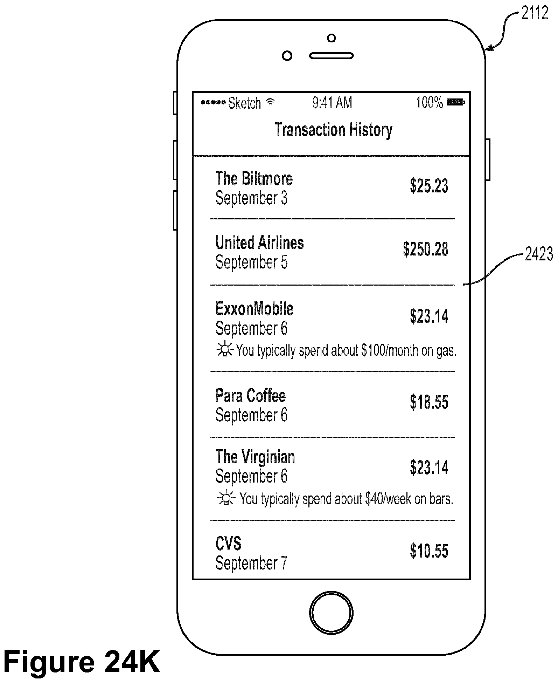

Figure 24K shows a transaction history and insight screen 2423 of the dynamic interface. Transaction history and insight screen 2423 may show a list of previous financial transactions the user has incurred. Some or all of the transactions may include insights related to the transactions. For example, as shown in Figure 24K, the ExxonMobil transaction was determined to be a gas purchase (or likely to be a gas purchase) as described herein, and transaction history and insight screen 2423 includes an insight indicating how much the user spends on gas in a month.

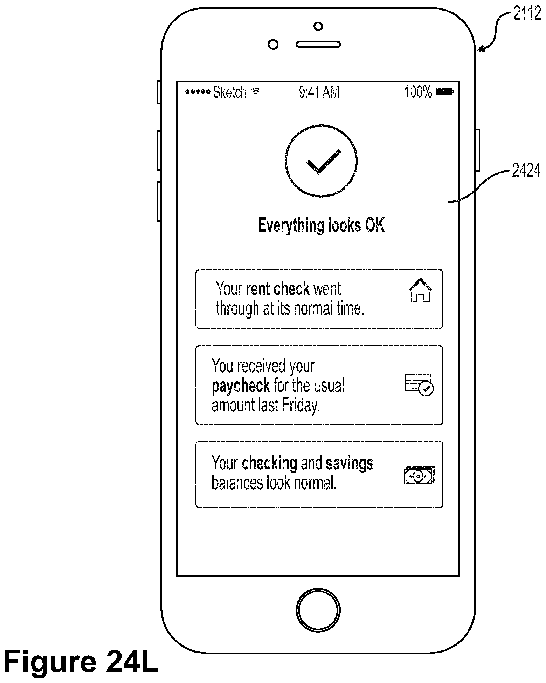

Figure 24L is a quick look screen 2424 of the dynamic interface. Quick look screen 2424 may provide a summary of insights, for example showing that everything is OK as in Figure 24L or highlighting any major issues in other examples. In Figure 24L, everything is OK because expected debits and credits processed normally and accounts have normal balances. The user may be able to select the summary elements to view details about the topic that contribute to it being OK. For example, clicking on the summary indicating that the checking and savings balances look normal may cause user device 2112 to display details about the current state of these accounts and/or recent transactions associated with the accounts.

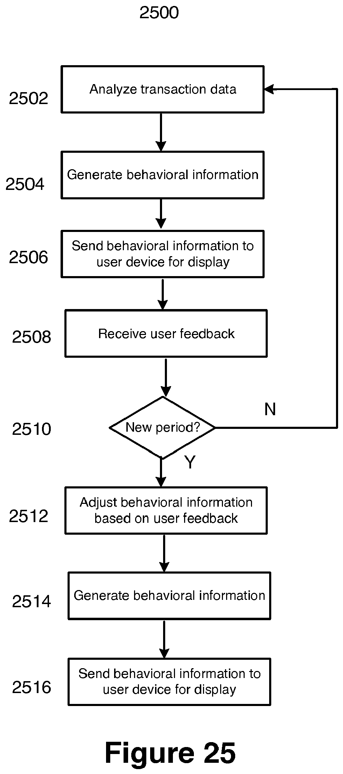

Figure 25 shows an interface generation process 2500 according to an embodiment of the present disclosure. Server device 2102 may perform process 2500 to generate behavioral information supporting insight displays presented by user device 2112 (e.g., Figures 24A-24L). For example, insight service 2104 may analyze user transaction data to formulate behavioral information which may be used to present insights beyond simple reporting of the transaction data. These insights may appear in the dynamic interface as described above. Process 2500 may be used for generating a single piece of behavioral information, but in some embodiments, server device 2102 may perform process 2500 to analyze multiple pieces of transaction data and/or perform multiple different types of analysis in order to support display of multiple insights on one or more screens of the dynamic interface.

At 2502, server device 2102 may analyze transaction data for a user of user device. For example, financial database 2106 may contain records of transactions involving one or more user accounts. Financial database 2106 may contain records related to credit cards, checking accounts, savings accounts, and/or other financial accounts. Transaction data may include information such as a merchant and/or location of the transaction, a time of the transaction, and/or an amount of the transaction. In some embodiments, financial database 2106 may contain additional data and/or metadata providing further details about the transaction. For example, server device 2102 may be configured to determine a transaction category and/or an underlying activity surrounding the transaction (e.g., by grouping transactions together that are closely linked in time and/or place, server device 2102 may determine that the transactions all relate to a single trip or event; and/or using metadata about transaction category type, brand, and/or location, server device 2102 may determine that a set of transactions relate to one another owing to one or more similar transaction characteristics). For example, detailed descriptions of systems and methods related to determining transaction categories and/or underlying activities and/or other details related thereto are described in U.S. Patent Application No. 16/107,571 filed on August 21, 2018, U.S. Patent Application No. 16/107,480 filed on August 21, 2018, and U.S. Patent Application No. 16/107,524 filed on August 21, 2018, which are each incorporated by reference in their entirety.

Insight service 2104 may gather information from financial database 2106 as specified by one or more scripts. For example, each insight card described above may be generated by a specific script and/or combination of scripts. To generate a card, insight service 2104 may start executing its script. The script may direct insight service 2104 to extract specific data from financial database 2106.

At 2504, server device 2102 may generate behavioral information, for example as an outcome of processing the script for a card. The behavioral information may illustrate one or more insights. For example, in card 2401B of Figure 24A, the behavioral information generated at 2504 indicates that about 16% of the user's total income was spent on food. Insight service 2104 may have determined this by gathering all information for the month related to income and to food purchases from financial database 2106 and determining what percentage of income was spent on food. The specific data to pull from financial database 2106 and/or the specific equation or algorithm to use with the data may be defined by the script for card 2401B.

Any scripts may be written for a card. By way of example only, a script may be configured to examine common strings of transaction types within a specific, closely-linked period of time. For example, a rideshare purchase, a restaurant purchase, a bar purchase, a ticket at an event space, and another rideshare purchase might indicate a 'night out,' and a single script may be written to find those patterns and identify them.

At 2506, server device 2102 may send behavioral information generated at 2504 to user device 2112. This may allow user device 2112 to display the behavioral information, for example in the form of a card (e.g., card 2401B) or other interface.

At 2508, server device 2102 may receive user feedback from user device 2112. As noted above, user device 2112 may present insights in a dynamic interface configured to accept user input. For example, the user may provide feedback indicating that the insight is useful (e.g., the user would like to see the insight in future time periods, and/or the user would like the insight to be more prominently displayed) or not useful (e.g., the user would not like to see the insight in future time periods, and/or the user would like the insight to be less prominently displayed).

At 2510, server device 2102 may determine whether a new reporting period for transaction data has begun. If not, server device 2102 may continue generating behavioral information and receiving user feedback at 2502-2508. For example, as noted above, insight service 2104 may generate data for multiple cards. Accordingly, insight service 2104 may repeat 2502-2508 for different scripts. In some embodiments, the reporting period may be a predefined period and/or may be defined by the user (e.g., weekly, monthly, biweekly, or anchored to pay periods).

However, if a new reporting period for transaction data has begun (e.g., a new day, a new week, a new month, etc.), at 2512, server device 2102 may adjust its processing to generate behavioral information based on user feedback. For example, if a user has asked for a certain type of insight to be dropped from the dynamic interface, insight service 2104 may remove the associated script from a set of scripts to be processed. In another example, if a user has asked for insights that were not previously presented, insight service 2104 may add a script for providing such insights if one is available.

At 2514, server device 2102 may generate behavioral information, for example as an outcome of processing the script for a card. The behavioral information may illustrate one or more insights. This processing may be similar to the processing of 2504, for example, but may be based on updated transaction data in transaction database 2506.

At 2516, server device 2102 may send behavioral information generated at 2514 to user device 2112. This may allow user device 2112 to display the behavioral information, for example in the form of a card (e.g., card 2401B) or other interface. While process 2500 shows only one new period changeover at 2510, it may be understood that server device 2102 may receive further feedback and perform additional iterations of various steps of process 2500 over time after step 2516.

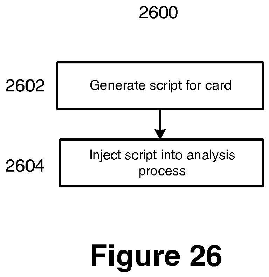

Figure 26 shows an interface updating process 2600 according to an embodiment of the present disclosure. Server device 2102 may perform process 2600 to facilitate presentation of new types of insights and/or new cards within the dynamic interface. Server device 2102 may perform process 2600 while interface generation process 2500 is active in some embodiments, thereby allowing new insight cards to be inserted into the dynamic interface on the fly.

At 2602, server device 2102 may generate a script for a card. For example, insight service 2104 may receive instructions for generating the script from an admin or programmer through a user interface in communication with server device 2102. In another example, insight service 2104 may receive instructions for generating the script from other sources (e.g., other instances of insight service 2104 may share script instructions). The instructions may define the look and feel of a card, where and/or when the card may be displayed, what data the card may include, how a user may interact with the card, and/or other parameters. Insight service 2104 may configure the card so that its code may access appropriate data within financial database 2106. For example, if the card presents an insight related to the user's checking account withdrawals, insight service 2104 may configure the code to access the user's checking account information within financial database 2106. The code may access the information, perform processing to generate an insight, and present the insight (e.g., see examples of FIGS. 24A-24L above).

At 2604, server device 2102 may inject the script for the card into interface generation process 2500. For example, as described above, insight service 2104 may analyze transaction data at 2502. Insight service 2104 may analyze transaction data to generate insights for various cards providing various insights. Insight service 2104 may inject the script for the card into process 2500 so that the analysis may include the analysis prescribed by the new card, and the behavioral information generated at 2504 and sent at 2506 may include information for displaying the new card by user device 2112.

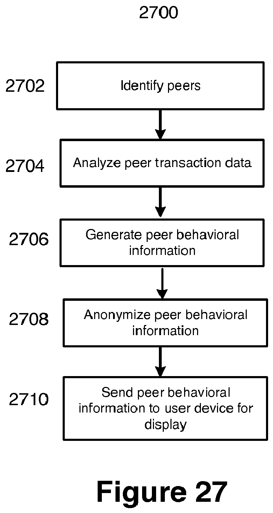

Figure 27 shows an interface generation process 2700 according to an embodiment of the present disclosure. Server device 2102 may perform process 2700 to generate peer data for some insights (e.g., as shown in FIG. 24I). Peer data-based insights may invoke specific processing in some embodiments in order to anonymize and protect data that may be usable to identify peers. For example, as described above, server device 2102 performing process 2500 may analyze transaction data for a variety of insights at 2502. If an insight analysis calls for inclusion of peer data, server device 2102 may perform process 2700 to provide the peer data. As noted above, in some embodiments, the user may be able to customize the peer definition.

At 2702, server device 2102 may identify one or more peers who are similar to the user being analyzed. For example, insight service 2104 may identify other users meeting a predefined or user defined peer definition. Insight service 2104 may select all or a subset of such identified users as peers for evaluation in the processing described below.

At 2704, server device 2102 may analyze transaction data for the identified one or more peers. For example, financial database 2106 may contain records of transactions involving the peer accounts. Financial database 2106 may contain similar data for the peer accounts as for the user account described above in the context of Figure 25 in some embodiments. For example, financial database 2106 may contain records related to credit cards, checking accounts, savings accounts, and/or other financial accounts. In some embodiments, financial database 2106 may not store data that could be used to actually identify the peer (e.g., the data may be anonymized and/or aggregated), only data indicating how the peer may relate and/or compare with the user when anonymized and/or aggregated. Transaction data may include information such as a merchant and/or location of the transaction, a time of the transaction, and/or an amount of the transaction. In some embodiments, financial database 2106 may contain additional data and/or metadata providing further details about the transaction. For example, server device 2102 may be configured to determine a transaction category and/or an underlying activity surrounding the transaction (e.g., by grouping transactions together that are closely linked in time and/or place, server device 2102 may determine that the transactions all relate to a single trip or event).

Insight service 2104 may gather information from financial database 2106 as specified by one or more scripts. For example, each insight card described above may be generated by a specific script and/or combination of scripts. To generate a card, insight service 2104 may start executing its script. The script may direct insight service 2104 to extract specific data from financial database 2106.

At 2706, server device 2102 may generate behavioral information for the peers. The behavioral information may illustrate one or more insights. The specific data to pull from financial database 2106 and/or the specific equation or algorithm to use with the data may be defined by the script being processed. Insight service 2104 may pull similar data and perform similar processing for each of the peers for use in a script, for example, so that trends and/or averages may be detected.

By way of example only, a script may be configured to perform calculation for the insight, "in the past year, you spent 30% less on going out than people who live in the same area and make as much as you." The script may sum the amount the user has spent on 'going out' expenses (e.g., as defined in the example script described in relation to process 2500 above), sum the amount for a personalized, anonymized and/or aggregate data set as defined by peer conditions (e.g., same area, same income), and calculate a percentage comparison.

At 2708, server device 2102 may anonymize the behavioral information. For example, insight service 2104 may examine the behavioral information to detect any data that may be used to identify one or more of the peers (e.g., a name, account number, address, or other personal information). If insight service 2104 detects any identifying data, insight service 2104 may remove the identifying data from the behavioral information.

At 2710, server device 2102 may send behavioral information generated at 2514 to user device 2112. This may allow user device 2112 to display the behavioral information, for example in the form of a card or other interface. If process 2700 was instituted during performance of process 2500, server device 2102 may resume process 2500 (e.g., receiving user feedback at 2508).

While various embodiments have been described above, it should be understood that they have been presented by way of example and not limitation. It will be apparent to persons skilled in the relevant art(s) that various changes in form and detail can be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

## Claims

1. A computer-implemented method for forming an experience set from a transaction list, the method comprising:
obtaining a list of transactions from a computer network;
analyzing the list of transactions by each of a plurality of experience matchers to identify, in each of the experience matchers by searching within the list of transactions, an experience set having an experience set type and encompassing a set of the transactions;
identifying a first experience set by a first of the experience matchers and a second experience set by a second of the experience matchers based on the list of transactions, the second experience set being different from the first experience set;
in response to the first experience set and the second experience set sharing at least one of the transactions, choosing one of the first experience set or the second experience set to be associated with the at least one of the transactions; and
providing transaction details associated with one of the first identified experience set or the second identified experience set for display to a user in a graphical user interface.

2. The method of claim 1, comprising identifying the first experience set in the first experience matcher based on a time range associated with a group of transactions in the list of transactions.

3. The method of claims 1 or 2, comprising identifying the second experience set in the second experience matcher based on a location associated with a group of transactions in the list of transactions.

4. The method of claim 1, comprising:
comparing details of the transactions in the transaction list with predetermined attributes in a database;
identifying a first of the transactions as a trigger transaction based on the comparison, the trigger transaction having been conducted on a first date;
obtaining additional details regarding the trigger transaction from a data source;
identifying a target date based on the additional details, the target date being later in time than the first date;
receiving details of additional transactions made after the first date and before the target date;
receiving details of a second transaction made on the target date; and
identifying the first experience set by the first experience matcher based on the first transaction and the second transaction, the first experience set including the first transaction and the second transaction while excluding the additional transactions.

5. The method of claim 4, comprising:
causing, after the first date and before the target date, a reminder to be displayed in the graphical user interface reminding the user that the first transaction and any transactions occurring on the target date will be included in an experience set.

6. The method of any of claims 1-5, comprising updating the first experience matcher based on preferences associated with a user.

7. The method of any of claims 1-6, comprising updating the first experience matcher based on a machine learning model.

8. The method of any of claims 1-7, comprising:
determining, based on a predetermined hierarchy of priorities, that the first experience set has a higher priority than the second experience set; and
providing, based on the determination, transaction details associated with the first experience set for display to a user in a graphical user interface.

9. The method of claims 1, 2, or 6-8, comprising identifying the first experience set in the first experience matcher based on a combination of a merchant category code associated with each transaction in a group of the transactions being a predetermined merchant category code, and a time associated with each transaction in the group of the transactions being a time within a predetermined time range.

10. The method of any of claims 1-3 or 6-8, comprising identifying the first experience set in the first experience matcher based on a combination of a time associated with each transaction in a group of transactions being a time within a predetermined time range, and a location associated with each transaction in the group of transactions being within a predetermined proximity of each of the other transactions in the group.

11. The method of any of claims 1-10, wherein each of the transactions in the list of transactions is associated with a time, the time indicating when a merchant requested authorization for the transaction.

12. A system comprising:
one or more memories storing instructions; and
one or more processors that, when executing the instructions, are configured to carry out the method of any of claims 1-11.

13. The system of claim 12, further comprising:
a first set of the memories storing a first portion of the instructions;
a second set of the memories storing a second portion of the instructions;
a first set of the processors that, when executing the first portion of the instructions, are configured carry out the obtaining, choosing, and providing steps of claim 1; and
a second set of the processors that, when executing the second portion of the instructions, are configured to carry out the analyzing and identifying steps of claim 1.

14. The system of claim 13, wherein each of the processors in the second set of processors executes one of the plurality of experience matchers.

15. A computer program operable when run on one or more processors to instruct the one or more processors to perform the method of any of claims 1-11.
